(19) **Europäisches Patentamt / European Patent Office / Office européen des brevets**

(11) **EP 4 192 156 A1**

(12) **EUROPEAN PATENT APPLICATION**
published in accordance with Art. 153(4) EPC

(43) Date of publication:
**07.06.2023 Bulletin 2023/23**

(21) Application number: **20948190.2**

(22) Date of filing: **07.08.2020**

(51) International Patent Classification (IPC):
**H04W 72/04** (2023.01)    **H04L 5/00** (2006.01)

(52) Cooperative Patent Classification (CPC):
**H04L 5/00; H04W 72/04**

(86) International application number:
**PCT/CN2020/108020**

(87) International publication number:
**WO 2022/027695 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **WEN, Ronghui**
  **Shenzhen, Guangdong 518129 (CN)**
- **YU, Zheng**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **INFORMATION TRANSMISSION METHOD AND COMMUNICATION APPARATUS**

(57)    This application discloses an information transmission method and a communication apparatus, to resolve the problem in the conventional technology that a resource group having one or more overlapping resource blocks cannot simultaneously transmit information of a plurality of terminal devices and results in a waste of resources. The information transmission method includes: A network device obtains first information including configuration information of a first bandwidth and/or first indication information. A terminal device determines a first parameter based on the first information. The first parameter is for determining a resource configuration parameter of a first narrowband. At least one resource in the first narrowband is included in the first bandwidth. The resource configuration parameter of the first narrowband includes at least one of a starting resource of the first narrowband, a quantity of resources included in the first narrowband, or a location of the first narrowband in the first bandwidth. The terminal device determines the first narrowband based on the first parameter. The terminal device sends or receives information by using a resource of the first narrowband. Embodiments of this application are applied to an information transmission process of the terminal device.

FIG. 5

**Description**

**TECHNICAL FIELD**

This application relates to the field of communication technologies, and in particular, to an information transmission method and a communication apparatus.

**BACKGROUND**

In a communication system, a network device may notify, via broadcast signaling, each of a plurality of terminal devices communicatively connected to the network device of a bandwidth for transmitting uplink and downlink data. The terminal device may determine a resource granularity based on a quantity of resource units included in the bandwidth, and obtain one or more resource combinations based on the resource granularity, to implement data transmission and communication between the network device and the terminal device.

However, if a same bandwidth is allocated to a plurality terminal devices or bandwidths allocated to a plurality of terminal devices fixedly overlap with each other, one or more resource blocks in resource groups of the plurality terminal devices may consequently overlap with each other. Because a resource group having one or more overlapping resource blocks cannot simultaneously transmit data of a plurality of terminal devices, none of the plurality of terminal devices can use the resource group having the one or more overlapping resource blocks to perform data transmission and communication, resulting in a waste of resources.

**SUMMARY**

This application provides an information transmission method and apparatus, to resolve the problem in the conventional technology that a resource group having one or more overlapping resource blocks cannot simultaneously transmit information of a plurality of terminal devices and results in a waste of resources.

To achieve the foregoing objective, the following technical solutions are used in this application.

According to a first aspect, an information transmission method is provided. The method may be performed by a terminal device, or may be performed by a chip used in a terminal device. The following provides descriptions by using an example in which the information transmission method is performed by a terminal device. The terminal device obtains first information, where the first information includes configuration information of a first bandwidth, determines a first narrowband based on the first parameter, and sends or receives information by using a resource of the first narrowband. The first parameter is for determining a resource configuration parameter of the first narrowband, at least one resource in the first narrowband is included in the first bandwidth, and the resource configuration parameter of the first narrowband includes at least one of a starting resource of the first narrowband, a quantity of resources included in the first narrowband, or a location of the first narrowband in the first bandwidth.

According to a second aspect, an information transmission method is provided. The method may be performed by a terminal device, or may be performed by a chip used in a terminal device. The following provides descriptions by using an example in which the information transmission method is performed by a terminal device. The terminal device obtains first information, where the first information includes first indication information, determines a first parameter based on the first indication information, determines the first narrowband based on the first parameter, and sends or receives information by using a resource of the first narrowband. The first parameter is for determining resource configuration information of the first narrowband, at least one resource in the first narrowband is included in a first bandwidth, and the resource configuration information of the first narrowband includes at least one of the following: a starting resource of the first narrowband, a quantity of resources included in the first narrowband, or a location of the first narrowband in the first bandwidth.

Based on the information transmission method provided in the first aspect or the second aspect, the terminal device may determine, based on configuration information of a bandwidth, a resource location of a narrowband corresponding to/overlapping the bandwidth, to ensure that an allocation or indication division granularity of a starting location of the narrowband is the same as a resource allocation granularity of the bandwidth, thereby avoiding a problem that a narrowband obtained through allocation cannot be used due to narrowband overlapping, and increasing resource utilization.

In a possible implementation, if the first bandwidth is a carrier, the configuration information of the first bandwidth may include at least one of the following: a size of a resource block group RBG corresponding to the carrier, a configuration of a control resource set CORESET corresponding to the carrier, a quantity of resources included in the carrier, a center frequency of the carrier, a band band on which the carrier is located, a cyclic prefix type supported by the carrier, or a maximum subcarrier spacing SCS supported by the carrier. Alternatively, if the first bandwidth is a BWP, the configuration information of the first bandwidth includes at least one of the following: a size of a resource block group RBG corresponding to the BWP, a configuration of a control resource set CORESET corresponding to the BWP, a quantity of resources included in the BWP, a starting resource of the BWP, a subcarrier spacing SCS of the BWP, or a cyclic prefix type supported by the BWP. The terminal device may determine the first parameter based on one or more of a resource allocation granularity of the first bandwidth, a CORESET resource allocation granularity, and a subcarrier spacing.

Based on this possible implementation, the terminal device may select different configuration information based on different bandwidths, thereby improving flexibility.

In a possible implementation, the terminal device determines the resource configuration information of the first narrowband by using a quantity of resources as a granularity, where the quantity is the first parameter.

Based on this possible implementation, the terminal device may accurately determine the resource configuration information of the first narrowband.

In a possible implementation, at least one element in a value set of the first parameter belongs to {2, 4, 6, 8, 12, 16, 24}; or at least one value of the first parameter is $2^m$, and m is a positive integer; or at least one value of the first parameter is a multiple of 6.

Based on this possible implementation, the terminal device may directly determine the first narrowband based on the first parameter, thereby reducing a computing load of the terminal device. Further, the terminal device can reduce energy consumption.

In a possible implementation, the terminal device determines the first reference location from a reference location set based on the first indication information. The reference location set includes at least two of a starting location of the first bandwidth, a starting location of a carrier on which the first bandwidth is located, a common resource block CRB, a point A point A, an end location of the first bandwidth, a starting location of a synchronization signal and physical broadcast channel resource block SSB, or an end location of the SSB.

Based on this possible implementation, the terminal device may flexibly determine the first parameter based on the first indication information.

In a possible implementation, the first indication information indicates both a resource allocation granularity and a resource reference location. When the first parameter is a granularity, the first indication information may further indicate a reference location, and the first indication information indicates the first parameter in the reference location set.

In a possible implementation, the first bandwidth is a BWP of the terminal device, and a size of the BWP is greater than a size of the first narrowband; and/or a size of the BWP is M times a size of the first narrowband. M is configured, or a value of M is an integer multiple of 0.5, or a value of M is an integer multiple of 0.25, or at least one element in a value set of M belongs to {0.25, 0.5, 1, 2, 3, 4, 5}, or M is a prespecified positive integer. Alternatively, in FR1, at least one element in the value set of M belongs to {0.25, 0.5, 1, 2, 3, 4, 5}; or in FR2, at least one element in the value set of M belongs to {0.1, 0.2, 0.4, 1, 2, 4, 8}.

Based on this possible implementation, the terminal device may accurately determine the first bandwidth based on a configured value of M, thereby reducing a computing load. A resource may be allocated to the terminal device in a bandwidth range greater than a supported bandwidth range, and a network device may support more flexible scheduling, to avoid congestion caused by communication of too many users in a same narrowband.

In a possible implementation, the first bandwidth is a carrier, a size of the carrier is greater than a size of the first narrowband, and the first indication information further indicates a candidate location of the first narrowband or indicates a quantity of locations of the first narrowband.

Based on this possible implementation, the terminal device may flexibly and accurately determine the location of the first narrowband in the first bandwidth based on indication information of the network device.

According to a third aspect, an information transmission method is provided. The method may include: A network device determines first information, where the first information includes configuration information of a first bandwidth; and the network device receives or sends information by using a resource of the first narrowband. The first narrowband is determined based on a first parameter, the first parameter is determined based on the first information, the first parameter is for determining resource configuration information of the first narrowband, at least one resource in the first narrowband is included in the first bandwidth, and the resource configuration information of the first narrowband includes at least one of the following: a starting resource of the first narrowband, a quantity of resources included in the first narrowband, or a location of the first narrowband in the first bandwidth.

According to a fourth aspect, an information transmission method is provided. The method may include: A network device sends first information, where the first information includes first indication information, the first indication information is for determining a first parameter, the first parameter is for determining resource configuration information of a first narrowband, at least one resource in the first narrowband is included in a first bandwidth, and the resource configuration information of the first narrowband includes at least one of the following: a starting resource of the first narrowband, a quantity of resources included in the first narrowband, or a location of the first narrowband in the first bandwidth; and the network device receives or sends information by using a resource of the first narrowband.

Based on the information transmission method provided in the third aspect or the fourth aspect, the network device may determine, based on configuration information of a bandwidth, a resource location of a narrowband corresponding to/overlapping the bandwidth, to ensure that an allocation or indication division granularity of a starting location of the narrowband is the same as a resource allocation granularity of the bandwidth, thereby avoiding a problem that a narrowband obtained through allocation cannot be used due to narrowband overlapping, and increasing resource utilization.

In a possible implementation, if the first bandwidth is a carrier, the configuration information of the first bandwidth may include at least one of the following: a size of a resource block group RBG corresponding to the carrier, a configuration of a control resource set CORESET corresponding to the carrier, a quantity of resources included in the carrier, a center frequency of the carrier, a band band on which the carrier is located, a cyclic prefix type supported by the carrier, or a maximum subcarrier spacing SCS supported by the carrier. Alternatively, if the first bandwidth is a BWP, the configuration information of the first bandwidth includes at least one of the following: a size of a resource block group RBG corresponding to the BWP, a configuration of a control resource set CORESET corresponding to the BWP, a quantity of resources included in the BWP, a starting resource of the BWP, a subcarrier spacing SCS of the BWP, or a cyclic prefix type supported by the BWP. The network device may determine the first parameter based on one or more of a resource allocation granularity of the first bandwidth, a CORESET resource allocation granularity, and a subcarrier spacing.

Based on this possible implementation, the network device may select different configuration information based on different bandwidths, thereby improving flexibility.

In a possible implementation, the network device determines the resource configuration information of the first narrowband by using a quantity of resources as a granularity, where the quantity is the first parameter.

Based on this possible implementation, the network device may accurately determine the resource configuration information of the first narrowband.

In a possible implementation, at least one element in a value set of the first parameter belongs to {2, 4, 6, 8, 12, 16, 24}; or at least one value of the first parameter is $2^m$, and m is a positive integer; or at least one value of the first parameter is a multiple of 6.

Based on this possibl e implementation, the network device may directly determine the first narrowband based on the first parameter, thereby reducing a computing load of the network device. Further, the network device can reduce energy consumption.

In a possible implementation, the network device determines the first reference location from a reference location set based on the first indication information. The reference location set includes at least two of a starting location of the first bandwidth, a starting location of a carrier on which the first bandwidth is located, a common resource block CRB, a point A point A, an end location of the first bandwidth, a starting location of a synchronization signal and physical broadcast channel resource block SSB, or an end location of the SSB.

Based on this possible implementation, the network device may flexibly determine the first parameter based on the first indication information.

In a possible implementation, the first indication information indicates both a resource allocation granularity and a resource reference location. When the first parameter is a granularity, the first indication information may further indicate a reference location, and the first indication information indicates the first parameter in the reference location set.

In a possible implementation, the first bandwidth is a BWP of the terminal device, and a size of the BWP is greater than a size of the first narrowband; and/or a size of the BWP is M times a size of the first narrowband. M is configured, or a value of M is an integer multiple of 0.5, or a value of M is an integer multiple of 0.25, or at least one element in a value set of M belongs to {0.25, 0.5, 1, 2, 3, 4, 5}, or M is a prespecified positive integer. Alternatively, in FR1, at least one element in the value set of M belongs to {0.25, 0.5, 1, 2, 3, 4, 5}; or in FR2, at least one element in the value set of M belongs to {0.1, 0.2, 0.4, 1, 2, 4, 8}.

Based on this possible implementation, the network device may accurately determine the first bandwidth based on a configured value of M, thereby reducing a computing load. A resource may be allocated to the network device in a bandwidth range greater than a supported bandwidth range, and network device may support more flexible scheduling, to avoid congestion caused by communication of too many users in a same narrowband.

In a possible implementation, the first bandwidth is a carrier, a size of the carrier is greater than a size of the first narrowband, and the first indication information further indicates a candidate location of the first narrowband or indicates a quantity of locations of the first narrowband.

Based on this possible implementation, the terminal device may flexibly and accurately determine the location of the first narrowband in the first bandwidth based on indication information of the network device.

According to a fifth aspect, a communication apparatus is provided. The apparatus is used in a terminal device or a chip or a system-on-a-chip in a terminal device, or may be a functional module, configured to implement the method according to the first aspect or any possible design of the first aspect, in a terminal device. The apparatus may implement functions implemented by the terminal device in the foregoing aspects or the possible designs. The functions may be implemented by hardware executing corresponding software. The hardware or software includes one or more modules corresponding to the foregoing functions. For example, the communication apparatus includes a communication unit and a processing unit. The communication unit is configured to obtain first information, where the first information includes first indication information. The processing unit is configured to determine a first parameter based on the first indication information. The first parameter is for determining resource configuration information of a first narrowband, at least one resource in the first narrowband is included in a first bandwidth, and the resource configuration information of the first narrowband includes at least one of the following: a starting resource of the first narrowband, a quantity of resources included in the first narrowband, or a location of the first narrowband in the first bandwidth. The processing unit is configured to determine the first narrowband based on the first parameter, and is further configured to send or receive information by using a resource of the first narrowband.

For a specific implementation of the communication apparatus, refer to a behavior function of the terminal device in the information transmission method according to the first aspect or any possible design of the first aspect. Details are not described herein again. Therefore, the provided communication apparatus can achieve the same beneficial effects as the first aspect or any possible design of the first aspect does.

According to a sixth aspect, a communication apparatus is provided. The apparatus is used in a terminal device or a chip or a system-on-a-chip in a terminal device, or may be a functional module, configured to implement the method according to the first aspect or any possible design of the first aspect, in a terminal device. The apparatus may implement functions implemented by the terminal device in the foregoing aspects or the possible designs. The functions may be implemented by hardware executing corresponding software. The hardware or software includes one or more modules corresponding to the foregoing functions. For example, the communication apparatus includes a communication unit and a processing unit. The communication unit is configured to obtain first information. The first information includes configuration information of a first bandwidth. The processing unit is configured to determine a first parameter based on the first information, and determine the first narrowband based on the first parameter. The communication unit is further configured to send or receive information by using a resource of the first narrowband. The first parameter is for determining resource configuration information of the first narrowband, at least one resource in the first narrowband is included in the first bandwidth, and the resource configuration information of the first narrowband includes at least one of the following: a starting resource of the first narrowband, a quantity of resources included in the first narrowband, or a location of the first narrowband in the first bandwidth.

According to a seventh aspect, a communication apparatus is provided. The apparatus is used in a terminal device or a chip or a system-on-a-chip in a terminal device, or may be a functional module, configured to implement the method according to the second aspect or any possible design of the second aspect, in a terminal device. The apparatus may implement functions implemented by the terminal device in the foregoing aspects or the possible designs. The functions may be implemented by hardware executing corresponding software. The hardware or software includes one or more modules corresponding to the foregoing functions. For example, the communication apparatus includes a communication unit and a processing unit. The communication unit is configured to obtain first information, where the first information includes first indication information. The processing unit is configured to determine a first parameter based on the first information, and determine a first narrowband based on the first parameter. The communication unit is further configured to send or receive information by using a resource of the first narrowband. The first parameter is for determining resource configuration information of the first narrowband, at least one resource in the first narrowband is included in the first bandwidth, and the resource configuration information of the first narrowband includes at least one of the following: a starting resource of the first narrowband, a quantity of resources included in the first narrowband, or a location of the first narrowband in the first bandwidth.

According to an eighth aspect, a communication apparatus is provided. The apparatus is used in a network device or a chip or a system-on-a-chip in a network device, or may be a functional module, configured to implement the method according to the third aspect or any possible design of the third aspect, in a network device. The apparatus may implement functions implemented by the terminal device in the foregoing aspects or the possible designs. The functions may be implemented by hardware executing corresponding software. The hardware or software includes one or more modules corresponding to the foregoing functions. For example, the communication apparatus includes a processing unit. The communication unit is configured to send first information. The first information includes first indication information, the first indication information is for determining a first parameter, the first parameter is for determining resource configuration information of a first narrowband, at least one resource in the first narrowband is included in a first bandwidth, and the resource configuration information of the first narrowband includes at least one of the following: a starting resource of the first narrowband, a quantity of resources included in the first narrowband, or a location of the first narrowband in the first bandwidth. The communication unit is further configured to send or receive information by using a resource of the first narrowband.

According to a ninth aspect, a communication apparatus is provided. The communication apparatus may be an in-vehicle apparatus or a chip or a system-on-a-chip in an in-vehicle apparatus. The communication apparatus may implement functions implemented by the communication apparatus in the foregoing aspects or possible designs. The functions may be implemented by hardware. For example, in a possible design, the communication apparatus may include: a processor and a communication interface. The processor is configured to run a computer program or instructions, to implement the information transmission method described in the first aspect or any possible implementation of the first aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the information transmission method according to the first aspect or any possible design of the first aspect.

According to a tenth aspect, a communication apparatus is provided. The communication apparatus may be an in-vehicle apparatus or a chip or a system-on-a-chip in an in-vehicle apparatus. The communication apparatus may implement functions implemented by the communication apparatus in the foregoing aspects or possible designs. The functions may be implemented by hardware. For example, in a possible design, the communication apparatus may include: a processor and a communication interface. The processor is configured to run a computer program or instructions, to implement the information transmission method described in the second aspect or any possible implementation of the second aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the information transmission method according to the second aspect or any possible design of the second aspect.

According to an eleventh aspect, a communication apparatus is provided. The communication apparatus may be an in-vehicle apparatus or a chip or a system-on-a-chip in an in-vehicle apparatus. The communication apparatus may implement functions implemented by the communication apparatus in the foregoing aspects or possible designs. The functions may be implemented by hardware. For example, in a possible design, the communication apparatus may include: a processor and a communication interface. The processor is configured to run a computer program or instructions, to implement the information transmission method described in the third aspect or any possible implementation of the third aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the information transmission method according to the third aspect or any possible design of the third aspect.

According to a twelfth aspect, a communication apparatus is provided. The communication apparatus may be an in-vehicle apparatus or a chip or a system-on-a-chip in an in-vehicle apparatus. The communication apparatus may implement functions implemented by the communication apparatus in the foregoing aspects or possible designs. The functions may be implemented by hardware. For example, in a possible design, the communication apparatus may include: a processor and a communication interface. The processor is configured to run a computer program or instructions, to implement the information transmission method described in the fourth aspect or any possible implementation of the fourth aspect.

In another possible design, the communication apparatus may further include a memory. The memory is configured to store computer-executable instructions and data that are necessary for the communication apparatus. When the communication apparatus runs, the processor executes the computer-executable instructions stored in the memory, to enable the communication apparatus to perform the information transmission method according to the fourth aspect or any possible design of the fourth aspect.

According to a thirteenth aspect, a communication apparatus is provided. The communication apparatus may be the terminal device in the foregoing method embodiments, or a chip arranged in the terminal device. The communication apparatus includes a communication interface and a processor, and optionally, further includes a memory. The memory is configured to store a computer program or instructions. The processor is coupled to the memory and the communication interface. The processor, when executing the computer program or instructions, enables the communication apparatus to perform the method performed by the terminal device in the foregoing method embodiments.

According to a fourteenth aspect, a communication apparatus is provided. The communication apparatus may be the network device in the foregoing method embodiments, or a chip arranged in the network device. The communication apparatus includes a communication interface and a processor, and optionally, further includes a memory. The memory is configured to store a computer program or instructions. The processor is coupled to the memory and the communication interface. The processor, when executing the computer program or instructions, enables the communication apparatus to perform the method performed by the network device in the foregoing method embodiments.

According to a fifteenth aspect, a computer program product is provided. The computer program product includes computer program code. The computer program code, when run, enables the method performed by the terminal device in the foregoing aspects to be performed.

According to a sixteenth aspect, a computer program product is provided. The computer program product includes computer program code. The computer program code, when run, enables the method performed by the network device in the foregoing aspects to be performed.

According to a seventeenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete device.

According to an eighteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete device.

According to a nineteenth aspect, this application provides a computer-readable storage medium. The computer-readable storage medium stores a computer program. The computer program, when run, implements the method performed by the terminal device in the foregoing aspects.

According to a twentieth aspect, this application provides a computer-readable storage medium. The computer-readable storage medium stores a computer program. The computer program, when run, implements the method performed by the network device in the foregoing aspects.

According to a twenty-first aspect, a communication system is provided. The communication system includes a terminal device and a network device. The terminal device is communicatively connected to the network device. The terminal device may be configured to implement functions implemented by the terminal device in the first aspect or any possible design of the first aspect. The network device may be configured to provide a plurality of pieces of information for a communication apparatus, for example, configuration information of a first bandwidth.

## BRIEF DESCRIPTION OF DRAWINGS

FIG. 1 is a schematic diagram of a structure of a first narrowband and a structure of a first bandwidth according to an embodiment of this application;

FIG. 2 is a schematic diagram of a structure of another first narrowband and a structure of another first bandwidth according to an embodiment of this application;

FIG. 3 is a schematic diagram of a structure of a communication system according to an embodiment of this application;

FIG. 4 is a schematic diagram of a structure of a communication apparatus 400 according to an embodiment of this application;

FIG. 5 is an example flowchart of an information transmission method according to an embodiment of application;

FIG. 6 is a schematic diagram of a structure of still another first narrowband and a structure of still another first bandwidth according to an embodiment of this application;

FIG. 7 is a schematic diagram of a structure of still another first narrowband and a structure of still another first bandwidth according to an embodiment of this application;

FIG. 8 is a schematic diagram of a structure of still another first narrowband and a structure of still another first bandwidth according to an embodiment of this application;

FIG. 9 is a schematic diagram of a structure of a CORESET according to an embodiment of this application;

FIG. 10 is a schematic diagram of a structure of still another first narrowband and a structure of still another first bandwidth according to an embodiment of this application;

FIG. 11 is a schematic flowchart of another information transmission method according to an embodiment of application;

FIG. 12 is a schematic diagram of a structure of a communication apparatus 1200 according to an embodiment of this application;

FIG. 13 is a schematic diagram of a structure of a communication apparatus 1300 according to an embodiment of this application;

FIG. 14 is a schematic diagram of a structure of a communication system according to an embodiment of this application.

## DESCRIPTION OF EMBODIMENTS

Before embodiments of this application are described, terms in embodiments of this application are explained and described.

Bandwidth: A bandwidth may be a resource that is for transmitting data or information and that has a specific frequency domain width. The bandwidth described in this application may also be referred to as a bandwidth resource. Before a terminal device performs data transmission/information transmission, a network device may allocate a bandwidth to the terminal. In this case, a resource size of the bandwidth may be a maximum quantity of resources that can be occupied by the terminal device for receiving and/or sending information/data. For example, the bandwidth may be 20 MHz, or the bandwidth is 106 resource blocks (resource block, RB). Optionally, bandwidths may be classified into a plurality of types based on different widths/division granularities. For example, the bandwidth may be a carrier, or a bandwidth part (bandwidth part, BWP), or at least one resource unit included in a carrier, or at least one resource unit included in a BWP. This is not limited.

Narrowband: A narrowband may be for transmitting data or information. Alternatively, the narrowband may be a resource with a small frequency domain width (for example, smaller than a frequency domain width of a bandwidth). Alternatively, a plurality of narrowbands may be separated from a bandwidth. For example, the narrowband may be a BWP in a carrier, or may be some resources in a BWP or carrier. The resources may include at least one resource unit (a resource block (resource block, RB), a resource element (resource element, RE), a resource element group resource element group, REG, and a resource block group resource block group, RBG. The narrowband may also be a frequency domain resource after an offset of a BWP in a carrier, or may be a frequency domain resource after an offset of a resource including at least one resource unit (a resource block, a resource element, a resource element group, or a resource block group) in a BWP or carrier. Specifically, the narrowband may be determined based on a bandwidth supported by the terminal device.

It should be noted that the resource described in this application may be a frequency domain resource, a time domain resource, a code domain resource, a bandwidth resource, or the like. This is not limited.

For example, the bandwidth configured by the network device for the terminal device is a BWP. The BWP configured by the network device for the terminal device may include a plurality of RBs. A plurality of resource groups may be obtained by dividing the plurality of RBs included in the BWP based on a granularity, and each resource group may be referred to as one RBG. One RBG may include one or more consecutive RBs. The granularity for RB division may be referred to as an RBG granularity. Further, the network device may notify, via a signaling message, the terminal device of which RBGs in the plurality of RBGs may be for data/information transmission, that is, RBGs for data/information transmission are occupied. For example, the network device may notify, in the form of a bitmap (bitmap), the terminal device of RBGs that need to be occupied/used. For example, a bitmap that includes a plurality of bit numbers and that corresponds to the plurality of RBGs is sent to the terminal device. One bit number indicates whether one RBG can be used for transmitting data/information.

It should be noted that the granularity described in this application may be named as a resource division granularity, a resource allocation granularity, or the like. This is not limited. The resource division granularity may refer to a quantity of resource units included in a resource group obtained through division. For example, assuming that the resource division granularity is A, it indicates that resource allocation may be performed at the granularity of A resource units, or resource indication may be performed at the granularity of A resource units. An indication granularity means that when the network device allocates a resource to the terminal device, information indication of the resource is performed by using a quantity of basic resource units as an actual resource unit, where the quantity is the indication granularity. If the indication granularity is G, and the basic resource unit is an RB, the indicated resource allocation is performed by using G RBs as the resource unit. For example, if an indication granularity of frequency domain resources is 4, and "1" resource unit is allocated based on a resource allocation indication, an actual resource unit is 4. If the resource unit is an RB, an actually allocated resource unit is 4 RBs. For example, if an indication granularity of time domain resources is 4, and time domain resource allocation indicates "1" resource unit, an actual resource unit is 4. If the resource unit is a symbol, an actually allocated resource unit is 4 symbols.

RB: An RB may be a resource including 12 consecutive subcarriers on a frequency domain and one transmission time interval (transmission time interval, TTI) on a time domain. In different communication systems, a quantity of slots (slot) included in one TTI may be different. Generally, one TTI may include 1 slot or 2 slots, and 1 slot includes 7 symbols. A time-frequency resource including one subcarrier on a frequency and one symbol on a time domain is referred to as a resource element (resource element, RE). The terminal device may transmit data on one or more consecutive RBs (namely, an RBG) based on different slots.

However, there is a case that the network device allocates a same bandwidth to a plurality of different terminal devices or bandwidths allocated to the plurality of different terminal devices overlap with each other. Overlapping means that at least one resource unit is the same in different bandwidths. When the bandwidth is divided into a plurality of RBGs, one or more RBs in RBGs of the plurality of different terminal devices overlap with each other. To avoid mutual interference in data/information transmission of different terminal devices, the RBGs including an overlapping RB cannot be simultaneously used by the plurality of different terminal devices to perform data/information transmission. Only one terminal device can occupy resources in an RBG including the overlapping RB at a same moment. As a result, the other terminals cannot use the remaining RBGs, resulting in a waste of resources.

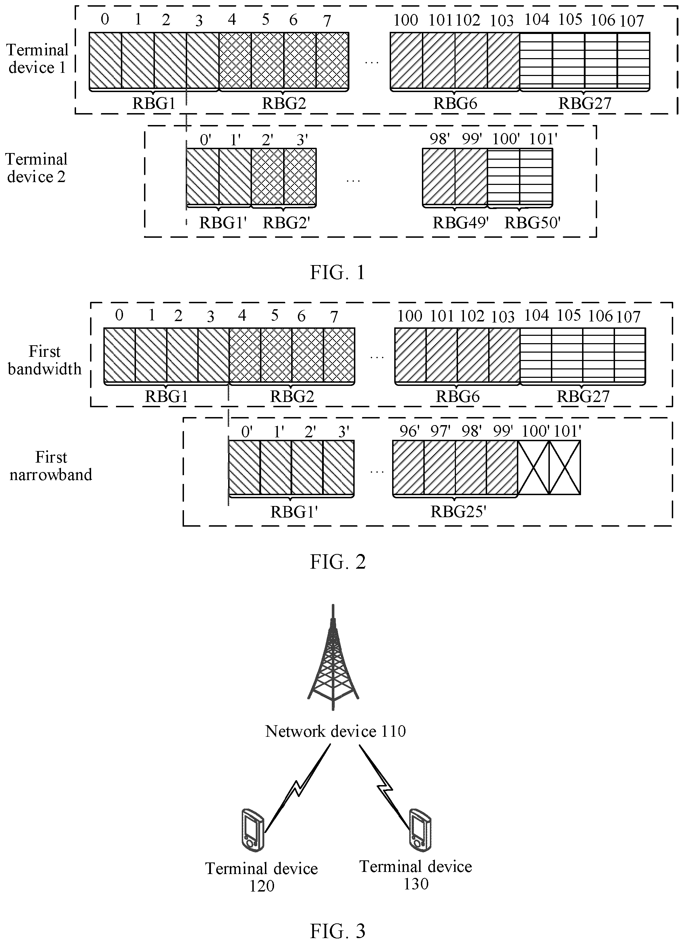

For example, as shown in FIG. 1, RBs included in a bandwidth resource allocated by a network device to a terminal device 1 are RB0 to RB 107, RBs included in a bandwidth resource allocated by the network device to a terminal device 2 are RB0' to RB 101', and the bandwidth resource of the terminal device 1 overlaps the bandwidth resource of the terminal device 2. At least one resource unit belonging to the bandwidth resource of the terminal device 1 is the same as at least one resource unit belonging to the bandwidth resource of the terminal device 2. Assuming that the terminal device 1 divides the bandwidth resource at the granularity of 4 RBs, RBG1 to RBG27 may be obtained. The terminal device 2 divides the bandwidth resource at the granularity of 2 RBs, to obtain RBG1' to RBG50'. It can be learned from FIG. 1 that RBG1 and RBG2 of the terminal device 1 have an overlapping RB with the RBG1' of the terminal device 2. If the terminal device 2 performs data transmission and communication with the network device on RBG1', RBG1 and RBG2 that include the overlapping RB cannot be used by another terminal device for transmitting data/information. The terminal device 1 neither can perform data transmission and communication with the network device on RBG1, and nor can perform data transmission and communication with the network device on RBG2. This means that the terminal device 1 can perform data transmission and communication with the network device only on an RBG other than RBG1 and RBG2, resulting in a waste of resources.

To resolve the foregoing technical problems, an embodiment of this application provides an information transmission method. The method includes: A terminal device obtains first information including configuration information of a first bandwidth and/or first indication information, determines, based on the first information, a first parameter for determining a resource configuration parameter of a first narrowband, determines the first narrowband based on the first parameter, and uses a resource of the first narrowband to send or receive information. Based on this technical solution, the terminal device may determine, based on configuration information of a bandwidth, a resource location of a narrowband corresponding to/overlapping the bandwidth, to ensure that an allocation or indication division granularity of a starting location of the first narrowband is the same as a resource allocation granularity of the first bandwidth, thereby avoiding the problem that the first narrowband and a resource allocated by the first bandwidth cannot be used due to narrowband overlapping, and improving resource utilization.

The first parameter may be a resource division granularity, that is, resource configuration information of the first narrowband is determined by using a quantity of resources as a granularity, where the quantity is the first parameter. The first parameter may also be a reference location for determining a starting location of the first bandwidth. For example, as shown in FIG. 2, it is assumed that the first parameter has a starting resource location of the first bandwidth as the reference location, and 4 RBs. That is, a reference location of the first narrowband is RB0 and the resource division granularity is 4 RBs. RB0 is a resource of which an RB index is 0. With reference to FIG. 2, a starting resource location of the first narrowband is one resource unit after the reference location. It may be determined, based on the resource division granularity and the reference location, that a starting location RB0' of the first narrowband corresponds to a resource location RB4 of the first bandwidth. A beginning location of a first resource group RBG1' determined based on the technical solution shown in this application is consistent with or aligned with a beginning location of RBG2 of the first bandwidth and an end location of RBG1 of the first bandwidth. That is, the allocation or indication division granularity of the starting location of the first narrowband is the same as the resource allocation granularity of the first bandwidth. In this way, when the terminal device performs data transmission and communication on RBG1', another terminal device may perform data transmission and communication on RBG1 other than RBG2. Compared with RBG1 in FIG. 1, RBG1 may still be for data transmission and communication, thereby reducing a waste of resources.

Specifically, for related descriptions of the first parameter and the technical solution described in embodiments of this application, refer to the following.

The following describes the implementations of embodiments of this application in detail with reference to accompanying drawings.

The information transmission method provided in this embodiment of this application may be applied to any communication system supporting communication. The communication system may be a 3rd generation partnership project (3rd generation partnership project, 3GPP) communication system, for example, a 5th generation (5th generation, 5G) mobile communication system, a new radio (new radio, NR) system, an NR vehicle-to-everything (vehicle-to-everything, V2X) system, or another next generation communication system, or may be a non-3GPP communication system. This is not limited. The information transmission method provided in this embodiment of this application is described below by using FIG. 1 as an example.

FIG. 3 is a schematic diagram of a communication system according to an embodiment of this application. As shown in FIG. 3, the communication system may include a network device 110 and a plurality of terminal devices such as a terminal device 120 and a terminal device 130. The terminal devices may be located in coverage of the network device and are communicatively connected to the network device. It should be noted that FIG. 3 is merely an exemplary framework diagram. A quantity of nodes included in FIG. 3 is not limited. In addition to functional nodes shown in FIG. 3, other nodes may be further included, for example, a core network device, a gateway device, an application server, and the like. This is not limited.

The network device is mainly configured to implement functions such as resource scheduling, radio resource management, and radio access control of the terminal. Specifically, the network device may be any node of a small base station, a wireless access point, a transmission reception point (transmission reception point, TRP), a transmission point (transmission point, TP), or another access node.

The terminal device (terminal equipment) may be referred to as a terminal, a user equipment (user equipment, UE), a mobile station (mobile station, MS), or a mobile terminal (mobile terminal, MT). Specifically, the terminal device may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart household, a vehicle terminal, or the like. In embodiments of this application, an apparatus for implementing a function of the terminal may be a terminal, or may be an apparatus that can support the terminal in implementing the function, for example, a chip system. The information transmission method provided in this embodiment of this application is described below by using an example in which the apparatus for implementing the functions of the terminal is a terminal.

It should be noted that in this embodiment of this application, the terminal device may be classified into a reduced capability terminal device (reduced capability UE, REDCAP UE) and a legacy (Legacy) UE based on a maximum bandwidth supported by the terminal device, power consumption of the terminal device, a quantity of antennas, and the like. The REDCAP UE may also be referred to as an NR light (NR light, NRL) terminal device. The REDCAP UE may be a terminal device of which a supported maximum bandwidth is less than a preset bandwidth and/or power consumption is less than a preset value and/or a quantity of antennas is less than a preset quantity. The legacy UE may be a terminal device of which a supported maximum bandwidth is greater than or equal to a preset bandwidth and/or of which power consumption is greater than or equal to a preset value and/or of which a quantity of antennas is greater than or equal to a preset quantity. The maximum bandwidth supported by the terminal device is used as an example. The REDCAP UE may be a terminal device of which a supported maximum bandwidth is less than 20 MHz, and the legacy UE may be a terminal device of which a supported maximum bandwidth is greater than 20 MHz, for example, 100 MHz.

The terminal device 120 and the terminal device 130 in FIG. 3 may be terminal devices of a same type, for example, REDCAP UEs or legacy UEs, or may be terminal devices of different types. For example, the terminal device 120 may be a REDCAP UE, and the terminal device 130 may be a legacy UE. Alternatively, the terminal device 120 may be a legacy UE, and the terminal device 130 may be a REDCAP UE. This is not limited.

The network device and the terminal device may be deployed on the land, including indoor or outdoor devices, handheld devices, or in-vehicle devices, may be deployed on the water, or may be deployed on an airplane, a balloon, and a satellite in the air. An application scenario of the network device and the terminal device is not limited in this embodiment of this application. The network device and the terminal device may communicate with each other through a licensed spectrum (licensed spectrum), may communicate with each other through an unlicensed spectrum (unlicensed spectrum), or may communicate with each other through the licensed spectrum and the unlicensed spectrum simultaneously. This is not limited.

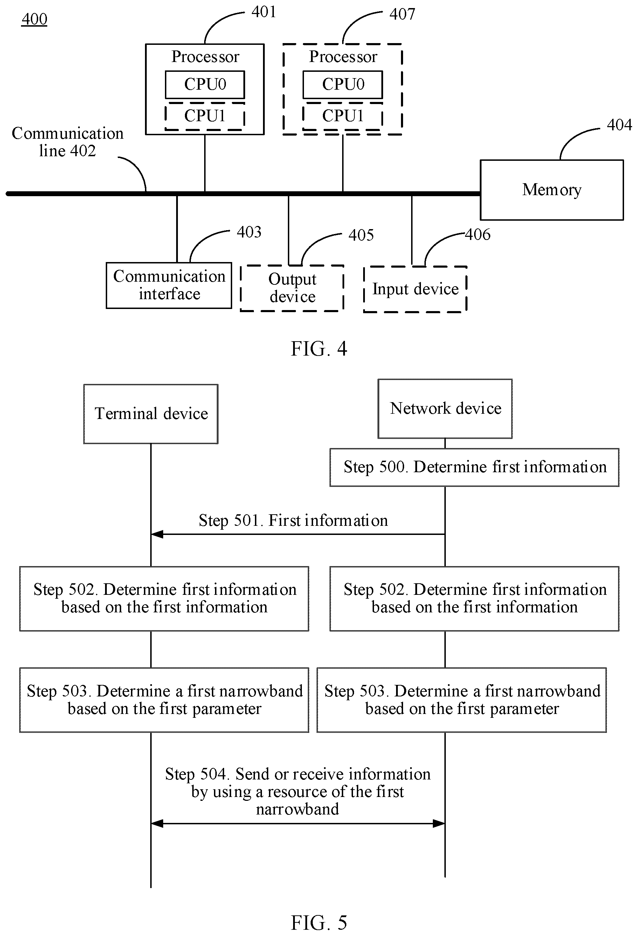

During specific implementation, network elements shown in FIG. 3, such the terminal device and the network device, may use a composition structure shown in FIG. 4 or include components shown in FIG. 4. FIG. 4 is a schematic diagram of composition of a communication apparatus 400 according to an embodiment of this application. When the communication apparatus 400 has functions of a terminal in this embodiment of this application, the communication apparatus 400 may be a terminal, or a chip or a system-on-a-chip in a terminal. When the communication apparatus 400 has functions of a network device in this embodiment of this application, the communication apparatus 400 may be a network device, or a chip or a system-on-a-chip in a network device.

As shown in FIG. 4, the communication apparatus 400 may include a processor 401, a communication line 402, and a communication interface 403. Further, the communication apparatus 400 may further include a memory 404. The processor 401, the memory 404, and the communication interface 403 may be connected to each other by the communication line 402.

The processor 401 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 401 may also be another apparatus having a processing function, for example, a circuit, a device, a software module, or the like.

The communication line 402 is configured to transmit information among the components included in the communication apparatus 400.

The communication interface 403 is configured to communicate with other devices or other communication networks. The other communication networks may be the Ethernet, a radio access network (radio access network, RAN), a wireless local area network (wireless local area networks, WLAN), and the like. The communication interface 403 may be a radio frequency module, a transceiver, or any apparatus that can implement communication. In this embodiment of this application, only an example in which the communication interface 403 is the radio frequency module is for description. The radio frequency module may include an antenna, a radio frequency circuit, and the like. The radio frequency circuit may include a radio frequency integrated chip, a power amplifier, or the like.

The memory 404 is configured to store instructions. The instructions may be a computer program.

The memory 404 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM), or another compact disk storage, optical disc storage, or magnetic disk storage medium or another magnetic storage device. The optical disc storage includes a compressed optical disc, a laser disc, an optical disc, a digital universal optical disc, a Blu-ray optical disc, and the like.

It should be noted that the memory 404 may exist independently of the processor 401, or may be integrated into the processor 401. The memory 404 may be configured to store instructions, programs code, some data, or the like. The memory 404 may be located inside the communication apparatus 400, or may be located outside the communication apparatus 400. This is not limited. The processor 401 is configured to execute the instructions stored in the memory 404, to implement the information transmission method provided in the following embodiments of this application.

In an example, the processor 401 may include one or more CPUs, for example, CPU0 and CPU1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a device such as a keyboard, a mouse, a microphone, a joystick, or the like, and the output device 405 is a device such as a display screen, a speaker (speaker), or the like.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or a different component deployment may be used.

In this embodiment of this application, the chip system may include a chip, or may include a chip and another discrete component.

In the embodiments of the application, the terms such as "exemplary" or "for example" are used to mean serving as an example, an illustration, or a description. Any embodiment or design scheme described as "exemplary" or "for example" in embodiments of this application should not be explained as being more preferred or having more advantages than another embodiment or design scheme. Exactly, use of the terms such as "exemplary" or "for example" or the like is intended to present a related concept in a specific manner.

The terms "first" and "second" mentioned below are merely intended for a purpose of description, and shall not be understood as an indication or implication of relative importance or implicit indication of the quantity of indicated technical features. Therefore, features defining "first" and "second" may explicitly or implicitly include one or more such features. In the description of embodiments of this application, unless otherwise specified, "a plurality of" means two or more than two.

The information transmission method provided in this embodiment of this application is described with reference to the communication system shown in FIG. 3. Devices in the following embodiments may have the components shown in FIG. 4. Actions, terms, and the like included in embodiments of this application may be mutually referenced. This is not limited. In embodiments of this application, names of messages exchanged between devices, names of parameters in the messages, or the like are merely examples. Another name may also be used during specific implementation. This is not limited.

It should be noted that, in this embodiment of this application, the information transmission method may be performed by a terminal device. For example, the terminal device may have the communication apparatus in FIG. 4. Alternatively, the method may be performed by a chip or a system-on-a-chip in the terminal device. This is not limited. The following provides descriptions by using an example in which the information transmission method is performed by a terminal device.

In this application, information transmission may include information sending and/or information receiving. Correspondingly, the network device sends information to the terminal device, and correspondingly, the terminal device receives the information from the network device.

FIG. 5 is a flowchart of an information transmission method according to an embodiment of application. As shown in FIG. 5, the method may include the following steps.

Step 500. A network device determines first information.

The first information may include configuration information of first bandwidth.

The network device may be a network device 110 in FIG. 3.

Step 501. The network device sends the first information to a terminal device. Correspondingly, the terminal device obtains the first information.

The terminal device may be any terminal device in FIG. 3, for example, may be a terminal device 120, or may be a terminal device 130. This is not limited.

The first information may be for determining resource configuration information of a first narrowband. The first information may include configuration information of a first bandwidth and/or first indication information. The network device may make the following signaling message carry the first information and send the signaling message to the terminal: radio resource control (radio resource control, RRC), downlink control information (downlink control information, DCI), and a media access control control element (media access control control element, MAC CE). The terminal device receives the signaling message from the network device, and obtains the first information from the signaling message.

The first bandwidth may be a BWP, or may be a carrier. The configuration information of the first bandwidth may include a plurality of resource parameters of the first bandwidth, and indicates a quantity of resources, a frequency domain resource, a time domain resource, and the like included in the first bandwidth.

In an example, if the first bandwidth is a carrier, the configuration information of the first bandwidth may include at least one of the following information: a size of an RBG corresponding to the carrier, a size of a resource group corresponding to the carrier, a configuration of a control resource set (control resource set, CORESET) corresponding to the carrier, a quantity of resources included in the carrier, a center frequency of the carrier, a band (band) on which the carrier is located, a subcarrier spacing of the carrier, or a cyclic prefix type supported by the carrier.

In another example, if the first bandwidth is a BWP, the configuration information of the first bandwidth may include at least one of the following information: a size of an RBG of the BWP, a size of a resource group corresponding to the BWP, a starting resource of the BWP, a subcarrier spacing of the BWP, or a cyclic prefix type supported by the BWP.

The size of the RBG may be a quantity of resources included in the RBG. For example, one RBG includes 4 RBs.

The configuration of the CORESET may be a quantity of resources included in a control channel element (control channel elements, CCE). For example, one CCE includes 6 resource element groups (Resource element Group, REG). For example, one CCE includes 6 resource blocks (resource block, RB). For example, the configuration of the CORESET may be a quantity of resources included in a basic unit REG bundle (bundle) of CCE mapping. Alternatively, the configuration of the CORESET corresponding to the carrier may be a quantity of resources included in a REG bundle. For example, one REG bundle includes 6 REGs. Alternatively, the configuration of the CORESET corresponding to the carrier may be a quantity of symbols used by the CORESET. For example, the CORESET occupies a time domain resource of 3 symbols. Alternatively, the configuration of the CORESET corresponding to the carrier may be an aggregation level (aggregation level, AL) included in the CORESET. The aggregation level is a quantity of CCEs that one control signal may include. For example, the aggregation level included in the CORESET is AL = 4, that is, one AL includes 4 CCEs.

The resource may be an RB, a resource element (resource element, RE), a REG, a resource block group (resource block group, RBG), a BWP, a carrier, a subcarrier, or the like.

The subcarrier spacing (sub-carrier spacing, SCS) may be an SCS supported by the terminal device, or may be an SCS used by the terminal device, or may be an SCS used by the resource, or may be a maximum value or a minimum value in SCSs supported by the terminal device, or may be a shared SCS, for example, an SCS used by a starting BWP. This is not limited.

Optionally, the first indication information may include the following first parameter or indicate the first parameter. That is, the first indication information may indicate a resource allocation granularity and/or a resource reference location. The resource reference location may be at least one reference location selected from a reference location set. The reference location set may be preconfigured or predefined by the network device. For example, the reference location set may include at least two of the following reference locations: a starting location of the first bandwidth, a starting location of a carrier on which the first bandwidth is located, a common resource block CRB, CRB0, a point A (point A), an end location of the first bandwidth, a starting location of an SSB, or an end location of an SSB. A reference location in the conventional technology is fixed, for example, as a carrier starting resource. According to the technical solution provided in this embodiment of this application, the reference location can be flexibly changed and determined, and signaling overheads can be reduced when the starting location is indicated. For example, the carrier includes 270 RBs, the first bandwidth is RB100 to RB200, and a resource location of the first narrowband is RB150 to RB200. If the carrier starting location is fixed as a reference location, when a resource indication granularity is 1, a resource starting location of the first narrowband is 150 in 270 RBs, that is, 9 bits are required. However, if the starting location of the first bandwidth is used as reference location, the resource starting location of the first narrowband is 50 in 100 RBs, that is, 6 bits are required. Therefore, signaling overheads are reduced.

Preconfiguration by the network device may mean that the network device indicates, via a signaling message, reference locations included in the reference location set, and the signaling message may be RRC, DCI, or a MAC CE. Predefinition may mean that reference locations included in the reference location set are prespecified in a protocol.

For example, if the first indication information indicates the resource reference location, the first indication information may include at least one bit number, and a bit state indicated by the at least one bit number corresponds to a reference location in the reference location set. A value of the bit number may indicate whether a reference location corresponding to the bit number is the resource reference location. For example, if the reference location set includes two reference locations: a starting location of the first bandwidth and a starting location of a carrier on which the first bandwidth is located, the first indication information may include two bits. If the bit state indicated by the first indication information is "0", the first indication information indicates the starting location of the first bandwidth. If the bit state indicated by the first indication information is "1", the first indication information indicates the starting location of the carrier on which the first bandwidth is located.

Step 502: The terminal device determines the first parameter based on the first information. Correspondingly, the network device also determines the first parameter based on the first information.

It should be specially noted that the sequence numbers of the steps in this embodiment merely identify the steps, and do not represent a sequence of performing the method. For example, the network device may also determine the first parameter after step 500, or may determine the first parameter after step 502. In other words, there is no particular order between the step of determining the first parameter by the network device and the step of determining the first parameter by the terminal device.

The first parameter may be a resource allocation granularity, or may be a resource reference location, for example, a first reference location. The first parameter may be for determining the resource configuration information of the first narrowband. At least one resource in the first narrowband may be included in the first bandwidth. The resource configuration information of the first narrowband includes at least one of the following information: a starting resource of the first narrowband, a quantity of resources included in the first narrowband, a location of the first narrowband in the first bandwidth, a size of an RBG included in the first narrowband, a configuration of a CORESET corresponding to the first narrowband, an SCS of the first narrowband, or a cyclic prefix type supported by the first narrowband.

That at least one resource in the first narrowband is included in the first bandwidth may mean that at least one resource in the first narrowband may overlap with at least one resource in the first bandwidth, or that the first narrowband is a part of the first bandwidth. For example, if the first bandwidth is 100 MHz, the first narrowband may be a part of 100 MHz. For example, the first narrowband may be 20 MHz.

Alternatively, the first narrowband may overlap with the first bandwidth. That the first narrowband overlaps with the first bandwidth may mean that the first narrowband completely overlaps with the first bandwidth, that is, the first narrowband and the first bandwidth are a same resource, for example, both are a starting BWP, or that the first narrowband partially overlaps with the first bandwidth, or that the first narrowband is a part of resources in the first bandwidth, or that the first bandwidth is a part of resources in the first narrowband. For example, the first narrowband is a starting BWP, and the first bandwidth is a part of resources in the starting BWP. Alternatively, the first bandwidth is a starting BWP, and the first narrowband is a part of resources in the starting BWP. This is not limited.

In a possible implementation, when the first parameter is a resource allocation granularity, at least one element in a value set of the first parameter belongs to {2, 4, 6, 8, 12, 16, 24}, or at least one value of the first parameter satisfies $2^m$, where m is a positive integer, or at least one value of the first parameter is a multiple of 6. The terminal device may determine the first parameter based on the first information in any one of the following three manners:

Manner 1: The first information includes the configuration information of the first bandwidth, and the terminal device determines the first parameter based on the configuration information of the first bandwidth. For example, the terminal device may determine the first parameter based on one or more of an RBG granularity, a CORESET resource parameter, and a subcarrier spacing in the configuration information of the first bandwidth.

Specifically, that the terminal device determines the first parameter based on one or more of the RBG granularity, the CORESET resource parameter, and the subcarrier spacing in the configuration information of the first bandwidth may include Case 1 to Case 5 as follows.

Case 1: The configuration information of the first bandwidth includes a subcarrier spacing, and the first parameter is $2^m$, where m is a positive integer.

For example, parameters m corresponding to subcarrier spacings { 15 kHz, 30 kHz, 60 kHz, 120 kHz, 240 kHz} are respectively {0, 1, 2, 3, 4}. That is, when the subcarrier spacing is 15 kHz, the parameter m is 0; or when the subcarrier spacing is 30 kHz, the parameter m is 1. The subcarrier spacing 30 kHz is twice the subcarrier spacing 15 kHz, namely, $2^{1-0} = 2$.

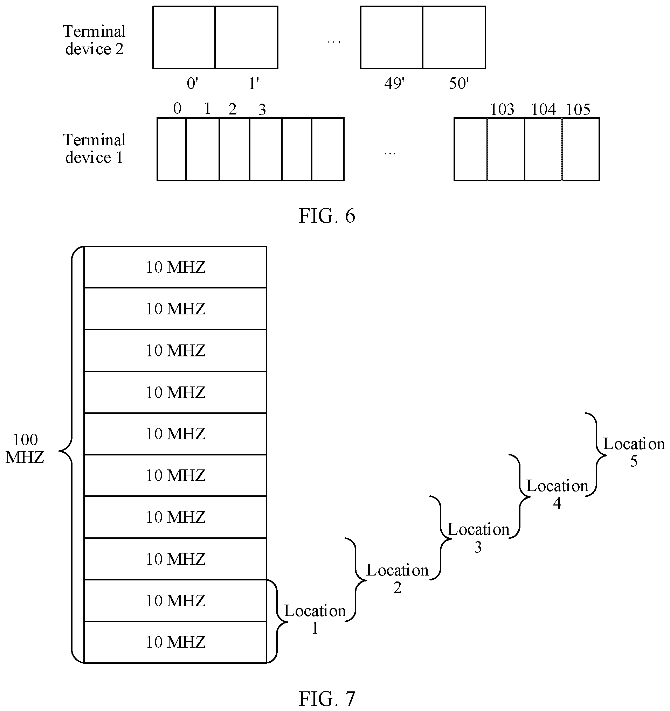

As shown in FIG. 6, a subcarrier spacing used by a terminal device 1 on a first resource is 30 kHz, a subcarrier spacing used by a terminal device 2 on a second resource is 15 kHz, and the subcarrier spacing of the terminal device 1 is twice the subcarrier spacing of the terminal device 2. Therefore, it may be determined that the terminal device 2 corresponds to a first parameter of the second resource. Values of all subcarrier spacings are considered, and multiple values between different subcarrier spacings are 1, 2, 3, or 4 respectively. When m is 1, 2, 3, or 4 respectively, the first parameter is 2, 4, 8, or 16 respectively. Certainly, a multiple value between different subcarrier spacings may also be less than 1. When the multiple value is less than 1, the resource allocation granularity is still 1.

Case 2: The configuration information of the first bandwidth includes an RBG granularity, and at least one element in the value set of the first parameter belongs to {2, 4, 6, 8, 12}.

Case 3: The configuration information of the first bandwidth includes a resource allocation granularity of a CORESET, and at least one value of the first parameter is a multiple of 6.

Case 4: The configuration information of the first bandwidth includes a subcarrier spacing and an RBG granularity, and the first parameter is a least common multiple of a subcarrier and the RBG granularity. For example, at least one element in the value set of the first parameter belongs to {2, 4, 8, 16}.

Case 5: The configuration information of the first bandwidth includes a subcarrier spacing, an RBG granularity, and a resource allocation granularity of a CORESET, and at least one element in the value set of the first parameter belongs to {2, 3, 4, 6, 8, 12, 16, 24}.

Manner 2: The first information includes the first indication information, and the terminal device determines the first parameter based on the first indication information.

The first indication information indicates the first parameter, or the first indication information carries the first parameter. In this case, the network device may determine the first parameter based on the configuration information of the first bandwidth. Further, the network device sends, to the terminal device, the first indication information that carries the first parameter or indicates the first parameter. Correspondingly, the terminal device receives the first indication information from the network device, and determines the first parameter based on the first indication information.

For a manner in which the network device determines the first parameter based on the configuration information of the first bandwidth, refer to the descriptions in Case 1 to Case 5. Details are not described again.

Manner 3: The first information includes the configuration information of the first bandwidth and the first indication information, and the terminal device may determine the first parameter according to the method in Manner 1 or Manner 2.

In another possible implementation, in a case that the first parameter is the resource reference location such as a first reference point, that the terminal device determines the first parameter based on the first information may include:

The terminal device selects the first parameter from the reference location set based on the first indication information.

For descriptions of the reference location set and a method for determining the first parameter from the reference location set by the terminal device based on the first indication information, refer to the descriptions in step 501. Details are not described herein again.

In another possible implementation, for example, the first indication information may indicate the resource allocation granularity and the resource reference location. For example, when the first parameter is the resource allocation granularity, the first indication information may further indicate the reference location, and the first indication information indicates the first parameter in the reference location set. The terminal device may determine, based on the first indication information, a resource reference location corresponding to the first parameter, and determine, based on the resource allocation granularity, a resource allocation granularity corresponding to the first parameter. Then, the terminal device may obtain the first parameter.

Step 503. The terminal device determines the first narrowband based on the first parameter. Correspondingly, the network device also needs to determine the first narrowband.

For example, the terminal device may determine the resource configuration information of the first narrowband based on the first parameter, and determine the first narrowband based on the resource configuration information of the first narrowband, for example, determine a starting resource of the first narrowband, a quantity of resources included in the first narrowband, a location of the first narrowband in the first bandwidth, or the like.

In an example, if the resource configuration information of the first narrowband includes the starting resource of the first narrowband, the terminal device may determine the first narrowband based on the starting resource of the first narrowband and a bandwidth supported by the terminal device.

In another example, if the resource configuration information of the first narrowband includes the quantity of resources included in the first narrowband, the terminal device may determine the first narrowband based on the quantity of resources included in the first narrowband and the starting location of the first bandwidth.

In another example, if the resource configuration information of the first narrowband includes the location of the first narrowband in the first bandwidth, the terminal device may determine the first narrowband based on the location of the first narrowband in the first bandwidth.

In another example, if the resource configuration information of the first narrowband includes more than one parameter of the starting resource of the first narrowband, the quantity of resources included in the first narrowband, or the location of the first narrowband in the first bandwidth, the terminal device may determine the first narrowband based on more than one parameter in the more than one parameter. For example, a case that the resource configuration information of the first narrowband includes the starting resource of the first narrowband and the quantity of resources included in the first narrowband is used as an example. The terminal device may determine a starting location of the first narrowband based on the starting resource of the first narrowband, and determine a resource length of the first narrowband or a quantity of resources occupied by the first narrowband based on the quantity of resources included in the first narrowband. Further, the terminal device may determine the first narrowband.

The following respectively describes methods for determining the starting resource of the first narrowband, the quantity of resources included in the first narrowband, and the location of the first narrowband in the first bandwidth.

1. Method for determining the starting resource of the first narrowband:

If the first indication information indicates the resource allocation granularity, the first parameter may be an indication granularity of the starting position of the first narrowband. The first indication information may further indicate a reference location of the first narrowband.

The terminal device may determine the starting location of the first narrowband based on the first indication information. For example, the first parameter is 4. If the starting location of the first narrowband is "1", the terminal device may determine that an actual starting location of the first narrowband is 1 * 4 = 4. In other words, the actual starting location of the first narrowband indicated via signaling is consistent with a starting location of RB4 of the first bandwidth. In another example, the first parameter is 4. If the starting location of the first narrowband is "2", the terminal device may determine that an actual starting location of the first narrowband is 2 * 4 = 8. In other words, the actual starting location of the first narrowband indicated via signaling is consistent with a starting location of RB8 of the first bandwidth.

2. Method for determining the quantity of resources included in the first narrowband:

If the first parameter may be an indication granularity of the resource length of the first narrowband, the first indication information indicates the indication granularity of the resource length of the first narrowband, and the terminal device may determine, based on the first indication information, the quantity of resources included in the first narrowband. For example, when the first parameter is 4, indicating that a value of the resource length of the first narrowband is "25", the terminal device may determine, based on the first indication information, that the resource length of the first narrowband is 25 * 4 = 100. That is, the quantity of resources of the first narrowband is 100. In other words, the first narrowband may include 100 RBs.

Optionally, the first parameter is an indication granularity of the starting location and the resource length of the first narrowband. The terminal device determines the actual starting location of the first narrowband and the resource length of the first narrowband based on the first parameter. For example, the first indication information is indication granularity indicating a resource starting location and a resource length of the first narrowband. For example, the indicated resource starting location of the first narrowband is "1", and the indicated resource length of the first narrowband is 25. When a granularity indicated by the first parameter is 4, the starting location of the first narrowband is RB4, and the resource length is 100, the first narrowband may be RB4 to RB103, that is, the first narrowband may be represented as [4, 103]. In another example, when the starting location of the first narrowband is RB8, and the resource length is 100, the first narrowband may be RB8 to RB107, that is, the first narrowband may be represented as [8, 107].

3. Method for determining the location of the first narrowband in the first bandwidth:

Manner (1): If the first bandwidth is a BWP of the terminal device, a size of the BWP is greater than a size of the first narrowband, and/or a size of the BWP is M times a size of the first narrowband. M is a configured or prespecified positive integer, or a value of M is an integer multiple of 0.5, or a value of M is an integer multiple of 0.25, or at least one element in a value set of M belongs to {0.25, 0.5, 1, 2, 3, 4, 5}.

The size of the BWP is a quantity of resources included in the BWP. The quantity of resources may be one or more of a quantity of RBs, a quantity of REs, a quantity of REGs, a quantity of RBGs, a quantity of subcarriers, and the like. This is not limited.

That a size of the BWP is M times a size of the first narrowband may mean that a quantity of resources included in the first bandwidth is M times the quantity of resources included in the first narrowband. The first narrowband may be a bandwidth supported by the terminal device. The size of the BWP configured by the network device for the terminal device may be greater than a size of the bandwidth supported by the terminal device. For example, a bandwidth supported by the terminal device is 20 MHz, that is, the first narrowband is 20 MHz. If M is 5, the size of the BWP is five times that of the first narrowband. In other words, the size of the BWP is 100 MHz.

M is configured by the network device. For example, M is configured by the network device for the terminal device via signaling such as DCI or RRC. Alternatively, M is prespecified, and a value of M is specified in a protocol, or is prewritten into the terminal device before the terminal device leaves the factory. If M is configured by the network device, in an example, the network device may determine the value of M based on capability information of the terminal device.

The capability information of the terminal device may include a maximum bandwidth supported by the terminal device. The network device may obtain the capability information of the terminal device by interacting with the terminal device. For example, the terminal device reports the capability information via signaling. Alternatively, the network device may obtain the capability information of the terminal device from other devices (for example, other network devices).

This is not limited.

Optionally, the first indication information may carry the value of M, and the terminal device may determine the first bandwidth based on the first indication information and the bandwidth supported by the terminal device. For example, the network device determines that the capability information of the terminal device is 20 MHz. The first indication information may also indicate M. For example, the value of M is 5. In this case, the terminal device determines that a BWP size is 100 MHz based on M and a capability of the terminal device.

Optionally, because the first indication information may indicate the resource allocation granularity of the first narrowband, as shown in FIG. 7, the first bandwidth is 100 MHz, and the resource allocation granularity of the first narrowband is 10 MHz. Therefore, the terminal device determines the location of the first narrowband in the first bandwidth. For example, the location of the first narrowband may be any one of location 1 to location 5 in FIG. 7. The network device determines a resource candidate location of the first narrowband in the first bandwidth by indicating the value of M and the resource allocation granularity.

In another example, M may be for determining a size of the first bandwidth, and the first bandwidth may be a range that is configured by the network device for the terminal device and in which information can be received and sent. For example, a bandwidth supported by the terminal device in a low-frequency band is 20 MHz. The low-frequency band is a band of which a band value is less than a preset value. For example, the preset value may be 6 GHz, and the low-frequency band may be referred to as sub-6G or FR1 (frequency range 1). A band higher than 6 GHz may be referred to as a high-frequency band, or above-6G, or FR2 (frequency range 2).

Optionally, a bandwidth supported by the terminal device in a low-frequency band is 20 MHz, and at least one element in the value set of M belongs to {0.25, 0.5, 1, 2, 3, 4, 5}. A bandwidth set corresponding to {0.25, 0.5, 1, 2, 3, 4, 5} is {5 MHz, 10 MHz, 20 MHz, 40 MHz, 60 MHz, 80 MHz, 100 MHz}.

It should be noted that, to reduce energy consumption of the terminal device, the terminal device may send or receive information on a bandwidth lower than the bandwidth supported by the terminal device. The terminal device may reduce a bandwidth for receiving and sending information, to reduce a transmit power, an operating voltage, and the like of the terminal device, thereby reducing energy consumption. For example, with reference to the foregoing examples, the bandwidth supported by the terminal device is 20 MHz, and when the value of M is 0.25 or 0.5, the first bandwidth determined by the terminal device may be 5 MHz or 10 MHz. A bandwidth of 5 MHz or 10 MHz is a typical bandwidth supported by the existing NR protocol.

Optionally, when a bandwidth supporting capability of the terminal device is limited, to avoid system congestion caused by communication of a large quantity of terminal devices on a small bandwidth and improve resource scheduling flexibility of the network device, the network device may configure a larger bandwidth for the terminal, to enable the terminal device to send or receive information on the larger bandwidth. For example, a bandwidth supported by the terminal device on this frequency band is 50 MHz, and at least one element in the value set of M belongs to {0.1, 0.2, 0.4, 1, 2, 4, 8}. A bandwidth set corresponding to {0.1, 0.2, 0.4, 1, 2, 4, 8} is {5 MHz, 10 MHz, 20 MHz, 50 MHz, 100 MHz, 200 MHz, 400 MHz}. 5 MHz, 10 MHz, and 20 MHz in the bandwidth set are considered from a perspective of power saving for the terminal device, and 100 MHz, 200 MHz, and 400 MHz are considered from a perspective of load balancing and scheduling flexibility.

Optionally, when the terminal device operates in FR1, at least one element in the value set of M belongs to {0.25, 0.5, 1, 2, 3, 4, 5}. When the terminal device operates in FR2, at least one element in the value set of M belongs to {0.1, 0.2, 0.4, 1, 2, 4, 8}.

Manner (2): If the first bandwidth is a carrier, a size of the carrier is greater than a size of the first narrowband, and the first indication information may further indicate a candidate location of the first narrowband or indicate a quantity of locations of the first narrowband.

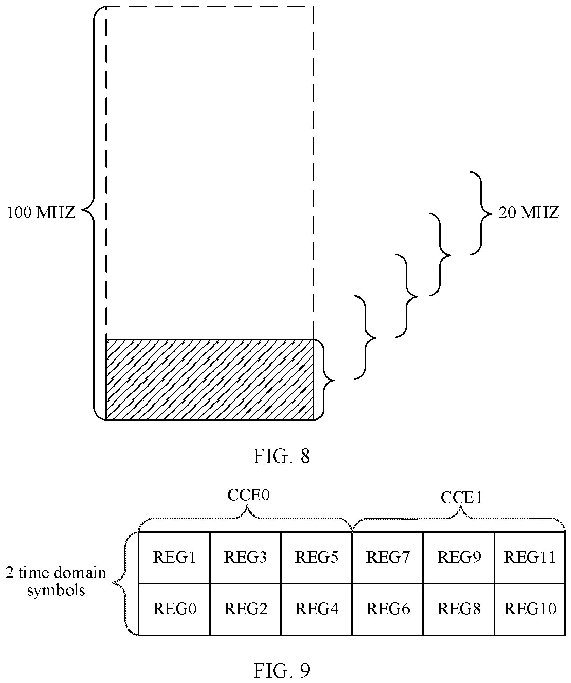

Optionally, the first narrowband may be a bandwidth supported by the terminal device. The size of the carrier configured by the network device for the terminal device may be greater than a size of the bandwidth supported by the terminal device. For example, as shown in FIG. 8, the first narrowband is 20 MHz. The first indication information may indicate the resource allocation granularity of the first narrowband. For example, the resource allocation granularity is 10 MHz.

If the first indication information further indicates the quantity of locations of the first narrowband, for example, as shown in FIG. 8, the quantity of locations N of the first narrowband is 10, and the resource allocation granularity of the first narrowband is 10 MHz, the terminal device may determine that a quantity of resources included in the first bandwidth is granularity * quantity = 10 MHz * 10 = 100 MHz.

Optionally, a maximum value of N may be reported, or may be determined according to a rule. For example, a time for tuning (returning) by the terminal device in a range of the first bandwidth is less than a value, or a value of N can ensure that candidate locations of the first narrowband are included in a same band (intra-band).

Optionally, the value of N may be fixed, for example, determined based on a maximum value reported by the UE. Alternatively, the value of N may be configured and indicated by the network device via signaling.

Manner (3): The first indication information indicates which method for determining the location of the first narrowband in the first bandwidth is used. For example, the first indication information indicates that the location of the first narrowband in the first bandwidth is determined in Manner (1) or Manner (2).

Step 504: The terminal device sends or receives information by using a resource of the first narrowband. Correspondingly, the network device performs information receiving or sending with the terminal device by using the resource in the first narrowband.

The information may be one or more of control information, data information, access information, paging information, or broadcast information. The data information may be uplink data information or downlink data information. The control information may be uplink control information or downlink control information.

Based on the technical solution in FIG. 5, when a bandwidth supporting capability of the terminal device is limited, to avoid system congestion caused by communication of a large quantity of terminal devices on a small bandwidth and improve resource scheduling flexibility of the network device, the network device may configure a larger bandwidth for the terminal, to enable the terminal device to send or receive information on the larger bandwidth. The network device determines the resource candidate location of the first narrowband in the first bandwidth by indicating the candidate location and the resource allocation granularity of the first narrowband. Alternatively, the network device determines the resource candidate location of the first narrowband in the first bandwidth by indicating the quantity of locations and the resource allocation granularity of the first narrowband.

In a possible implementation, in the information transmission method provided in this embodiment of this application, the configuration information of the first bandwidth may be preconfigured by the terminal device. The terminal device may obtain, by interacting with the network device, a parameter value corresponding to the configuration information of the first bandwidth. Alternatively, the terminal device may directly obtain, by interacting with the network device, parameter values corresponding to the configuration information and a configuration parameter of the first bandwidth. This is not limited. The configuration parameter may represent a feature of the first bandwidth. For example, the configuration parameter may include one or more of resource parameters such as a frequency domain resource allocation granularity, a CORESET resource granularity, and a subcarrier spacing. Certainly, the configuration parameter may further include another resource parameter, for example, a bandwidth. This is not limited.

In an example, the configuration information of the first bandwidth is preconfigured by the terminal device, and the terminal device may proactively obtain the parameter value corresponding to the configuration information of the first bandwidth from the network device. For example, the terminal device may send first request information to the network device, and the first request information is for requesting the parameter value corresponding to the configuration parameter. Correspondingly, after receiving the first request information from the terminal device, the network device may send the parameter value corresponding to the configuration information of the first bandwidth to the terminal device. For example, the network device may send first response information to the terminal device, and the first response information includes or indicates the parameter value corresponding to the configuration information of the first bandwidth.

For example, the first response information may include one or more bits, and the one or more bits correspond to the configuration information of the first bandwidth. A value of the bit may be a binary bit number "0" or "1", or may be another value. For example, if the value of the configuration parameter is 3, the value of the bit corresponding to the configuration parameter may be "100", or may be a value "3". This is not limited.

For example, a case that a first response message includes 3 binary bits, and the 3 binary bits correspond to the frequency domain resource allocation granularity, the CORESET resource granularity, and the subcarrier spacing in the configuration parameter is used as an example. When a state of a binary bit is "0", it indicates that the configuration parameter does not include the corresponding resource parameter. When the state of the binary bit is "1", it indicates that the configuration parameter includes the resource parameter. When the first response message includes 001, the terminal device may determine that the configuration parameter includes the subcarrier spacing and does not include the frequency domain resource allocation granularity or the CORESET resource granularity. When the first response message includes 010, the terminal device may determine that the configuration parameter includes the CORESET resource granularity and does not include the frequency domain resource allocation granularity or the subcarrier spacing. When the first response message includes 100, the terminal device may determine that the configuration parameter includes the frequency domain resource allocation granularity and does not include the CORESET resource granularity or the subcarrier spacing. When the first response message includes 111, the terminal device may determine that the configuration parameter includes the domain resource allocation granularity, the CORESET resource granularity, and the subcarrier spacing.

It should be noted that if the first bandwidth is preconfigured by the terminal device, the first bandwidth may be a non-common resource, for example, a non-common BWP. A common resource refers to a same resource used by different terminal device in a same cell or region. In this case, the terminal device may determine the configuration parameter according to a predefined rule or signaling. For example, the predefined rule or signaling indicates that the configuration information of the first bandwidth is a parameter corresponding to a common resource, and the terminal device may use the common resource as the configuration parameter. Alternatively, the terminal device may determine the configuration parameter based on a default value. For example, the default value may be a subcarrier spacing (subcarrier spacing, SCS) = 15 kHz, and an RBG granularity = 4.

In another example, the parameter value corresponding to the configuration information of the first bandwidth is obtained by the terminal device from the network device.

For example, the terminal device may obtain the parameter value from a message broadcast by the network device. The network device may periodically or randomly broadcast the first bandwidth and the value corresponding to the configuration information of the first bandwidth to a plurality of terminal devices accessing the network device. For example, the network device may broadcast the first bandwidth and the value corresponding to the configuration information of the first bandwidth in a form of a system information block 1 (system information block, SIB 1). After receiving SIB1 of the network device, the terminal device may obtain the parameter value corresponding to the configuration information of the first bandwidth from SIB 1.

In another example, the terminal device may proactively obtain the parameter value corresponding to the configuration parameter from the network device, and the terminal device may send second request information to the network device. The second request information is for requesting the parameter values corresponding to the configuration information and the configuration parameter of the first bandwidth. After receiving the second request information from the terminal device, the network device may send the parameter value corresponding to the configuration information of the first bandwidth to the terminal device. For example, the network device may send second response information to the terminal device, and the second response information includes or indicates the parameter value corresponding to the configuration information of the first bandwidth.

It should be noted that, if the first bandwidth broadcast by the network device is a common resource, the first bandwidth may be, for example, a data channel resource such as a common BWP. The common BWP may be a downlink initial access BWP (DL initial BWP) or an uplink initial access BWP (UL initial BWP), or the common resource may be a control channel resource for carrying control information such as system information, for example, a CORESET0 frequency domain resource. In a case that the first bandwidth is a common resource, after determining a first parameter reference value based on a parameter value of the common resource, the terminal device may further obtain a scale factor from the network device, and determine the first parameter based on a product of the indication granularity and the scale factor. Determining the first parameter reference value based on the parameter value of the common resource refers to a manner of determining the first parameter based on the first information in this embodiment of this application. For detailed descriptions, refer to the method shown in FIG. 5. Details are not described herein again.

In another possible implementation, if the first information includes the first indication information, the network device may determine the first parameter based on the configuration information of the first bandwidth. In this case, the network device and the terminal device may determine the configuration information of the first bandwidth according to a prespecified protocol. Based on this method, information exchange is not required between the network device and the terminal device, thereby reducing signaling.

In still another possible implementation, in the method provided in this embodiment of this application, Manner 1 in step 502 may be specifically implemented in the following steps.

If the first information includes the configuration information of the first bandwidth, the terminal device may determine the first parameter based on the configuration information of the first bandwidth.

The method for determining the first parameter by the terminal device based on the configuration information of the first bandwidth is described below by using an example in which the configuration information of the first bandwidth includes one or more of the frequency domain resource division granularity, the CORESET resource granularity, or the subcarrier spacing.

That the configuration information of the first bandwidth includes one or more of the frequency domain resource division granularity, the CORESET resource granularity, or the subcarrier spacing may include the following plurality of cases. For example, if the configuration information of the first bandwidth includes any one of the foregoing three resource parameters, three cases (respectively denoted as Case 1 to Case 3) may be included. If the configuration information of the first bandwidth includes any two of the foregoing three resource parameters, three cases (respectively denoted as Case 4 to Case 6) may be included. If the configuration information of the first bandwidth includes the foregoing three resource parameters, one case (denoted as Case 7) may be included. The following respectively describes methods for determining the first parameter in Case 1 to Case 7.

Case 1. If the configuration information of the first bandwidth includes the frequency domain resource division granularity, the first parameter may be determined based on the frequency domain resource division granularity of the first bandwidth. For example, the first parameter may be the frequency domain resource division granularity of the first bandwidth.

A case that the frequency domain resource division granularity is an RBG granularity is used as an example. A quantity of RBs included in the first bandwidth may also be referred to as a BWP size. The terminal device may determine an RBG granularity of the first bandwidth based on a correspondence between the quantity of RBs included in the first bandwidth and the RBG granularity.

The correspondence between the quantity of RBs included in the first bandwidth and the RBG granularity may be configured for the terminal device in the form of a table. Certainly, the correspondence may also be configured for the terminal device in another form, for example, in the form of an array. For example, the correspondence between the quantity of RBs included in the first bandwidth and the RBG granularity may be shown in Table 1.

**Table 1**

| BWP Size | RBG granularity 1 | RBG granularity 2 |
|----------|-------------------|-------------------|
| 1 to 36 | 2 | 4 |
| 37 to 72 | 4 | 8 |
| 73 to 144 | 8 | 16 |
| 145 to 275 | 16 | 16 |

It should be noted that the correspondence between the BWP size and the RBG granularity in Table 1 is merely an example. Table 1 may further include another correspondence between the BWP size and the RBG granularity. This is not limited. In Table 1, if the BWP size falls within a range of 1 to 36, the corresponding RBG granularity may be 2 or 4; and if the BWP size falls within a range of 37 to 72, the corresponding RBG granularity may be 4 or 8. If the BWP size falls within a range of 73 to 144 or a range of 145 to 275, refer to the foregoing descriptions. Details are not described again.

Optionally, for a case in which two different granularities may be configured in a same BWP size range, the terminal device may determine, by using configuration information of the network device, for example, configuration of RRC signaling, to select which value. If the terminal device determines a plurality of RBG granularities of the first bandwidth, the terminal device may select any one of the plurality of RBG granularities as the first parameter based on a preconfigured instruction. For example, if the preconfigured instruction indicates using a maximum value in the plurality of RBG granularities as the first parameter, the terminal device may use the maximum value in the plurality of RBG granularities as the first parameter. Alternatively, if the preconfigured instruction indicates using a minimum value in the plurality of RBG granularities as the first parameter, the terminal device may use the minimum value in the plurality of RBG granularities as the first parameter. This is not limited.

For example, the first bandwidth includes 270 RBs, and it can be learned from Table 1 that the RBG granularity of the first bandwidth is 16. That is, the first parameter may be 16 RBs.

In another example, the first bandwidth includes 133 RBs, and it can be learned from Table 1 that the RBG granularity of the first bandwidth is 8 or 16. In this case, the terminal device may select any one of the plurality of RBG granularities as the first parameter based on a preconfigured instruction. For example, if the preconfigured instruction indicates using a maximum value in a plurality of RBG granularities as the first parameter, the terminal device may use 16 as the first parameter. Alternatively, if the preconfigured instruction indicates using a minimum value in the plurality of RBG granularities as the first parameter, the terminal device may use 8 as the first parameter.

Case 2: If the configuration parameter includes the CORESET resource granularity of the first bandwidth, the first parameter may be determined based on the CORESET resource granularity corresponding to or included in the first bandwidth. For example, the first parameter is a ratio of a resource element set (resource element group, REG) bundle (bundle) size of any CCE of the CORESET resource granularity to a quantity of time domain symbols. For example, the first parameter is a quantity of REGs included in a CCE. For example, the first parameter is a quantity of REGs included in a REG bundle. For example, the first parameter is a ratio of the quantity of REGs included in the CCE to the quantity of time domain symbols. For example, the first parameter is a ratio of the quantity of REGs included in the REG bundle to the quantity of time domain symbols. For example, the first parameter is a ratio of the quantity of REGs included in the REG bundle to a parameter A, and the parameter A is a product of the quantity of time domain symbols and an interleaving depth.

One CORESET resource granularity may include one or more control channel elements (control channel elements, CCE). Any two CCEs in the one or more CCEs have the same REG bundle size and the same quantity of time domain symbols. For example, as shown in FIG. 9, the CORESET resource granularity of the first bandwidth includes two CCEs: CCE0 and CCE1. A quantity of time domain symbols of CCE0 and a quantity of time domain symbols of CCE1 are both 2. CCE0 includes 6 REGs, which respectively are REG0 to REG5, and CCE1 includes 6 REGs, which respectively are REG7 to REG11. In this case, the first parameter = a quantity of REGs included in the CCE/the quantity of time domain symbols = 6/2 = 3. For example, if a basic resource unit of the first narrowband is RB, it is determined based on the first parameter that a resource unit used when resource allocation is performed by the first narrowband is 3 RBs. For example, a starting resource location of the first narrowband is indicated based on a granularity of 3 RBs. For example, the first parameter = the quantity of REGs included in the CCE = 6. For example, if the REG bundle size is 6, the interleaving depth is 2, and the quantity of time domain symbols is 3, the first parameter = the quantity of REGs included in the REG bundle/the quantity of time domain symbols/the interleaving depth = 6/2/3 = 1.

Case 3: If the configuration parameter includes the subcarrier spacing of the first bandwidth, the first parameter may be determined based on a parameter corresponding to a subcarrier spacing of the first narrowband and a parameter corresponding to the subcarrier spacing of the first bandwidth.

The terminal device may determine the parameter corresponding to the subcarrier spacing based on a correspondence between the subcarrier spacing and the parameter corresponding to the subcarrier spacing.

The correspondence between the subcarrier spacing and the parameter corresponding to the subcarrier spacing may be configured for the terminal device in a form of a table, or certainly, may be configured for the terminal device in another form, for example, in a form of a value. For example, the correspondence between the subcarrier spacing and the parameter corresponding to the subcarrier spacing may be shown in Table 2.

**Table 2**

| Parameter corresponding to subcarrier spacing | Subcarrier spacing (kHz) |
|---|---|
| 0 | 15 |
| 1 | 30 |
| 2 | 60 |
| 3 | 120 |
| 4 | 240 |

It should be noted that the correspondence between the subcarrier spacing and the parameter corresponding to the subcarrier spacing in Table 2 is merely an example, and another correspondence may be further included. This is not limited. In Table 2, if the subcarrier spacing is 15 kHz, the parameter corresponding to the corresponding subcarrier spacing may be 0; if the subcarrier spacing is 30 kHz, the parameter corresponding to the corresponding subcarrier spacing may be 1; if the subcarrier spacing is 60 kHz, the parameter corresponding to the corresponding subcarrier spacing may be 2; if the subcarrier spacing is 120 kHz, the parameter corresponding to the corresponding subcarrier spacing may be 3; and if the subcarrier spacing is 240 kHz, the parameter corresponding to the corresponding subcarrier spacing may be 4.

In an example, the first parameter may be $\lceil 2^{u1-u2} \rceil$, where u1 represents the parameter corresponding to the subcarrier spacing of the first narrowband, and u2 represents the parameter corresponding to the subcarrier spacing of the first narrowband. $\lceil \ \rceil$ means rounding up.

For example, the subcarrier spacing of the first narrowband is 30 kHz, and the subcarrier spacing of the first bandwidth is 15 kHz. It can be learned from Table 2 that the parameter corresponding to the subcarrier spacing of the first narrowband is 1, and the parameter corresponding to the subcarrier spacing of the first bandwidth is 0. The

$$\text{first parameter} = \lceil 2^{u1-u2} \rceil = \lceil 2^{1-0} \rceil = 2 \text{ RBs}.$$

In another example, the subcarrier spacing of the first narrowband is 30 kHz, and the subcarrier spacing of the first bandwidth is 60 kHz. It can be learned from Table 2 that the parameter corresponding to the subcarrier spacing of the first narrowband is 1, and the parameter corresponding to the subcarrier spacing of the first bandwidth is 2. The

$$\text{first parameter} = \lceil 2^{u1-u2} \rceil = \lceil 2^{1-2} \rceil = 1 \text{ RB}.$$

In an example, the first parameter may be $2^{u1}$, and u1 represents the parameter corresponding to the subcarrier spacing of the first narrowband. For example, the subcarrier spacing of the first narrowband is 30 kHz. It can be learned from Table 2 that the parameter corresponding to the subcarrier spacing of the first narrowband is 1. The first parameter $= 2^{u1} = 2^1 = 2$ or 2 RBs.

Case 4: If the configuration parameter includes the frequency domain resource division granularity and the CORESET resource granularity of the first bandwidth, the first parameter may be determined based on parameters corresponding to the frequency domain resource division granularity and the CORESET resource granularity of the first bandwidth. For example, the first parameter may be a least common multiple of the frequency domain resource division granularity and the CORESET resource granularity of the first bandwidth.

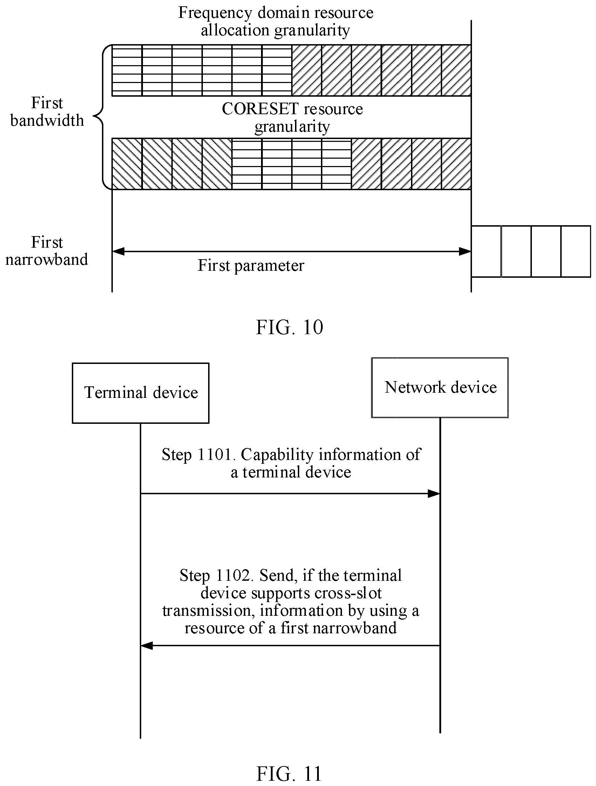

For example, as shown in FIG. 10, the frequency domain resource division granularity of the first bandwidth is 6 RBs, the CORESET resource granularity of the first bandwidth is 4 RBs, and then the first parameter may be 12 RBs.

Case 5: If the configuration parameter includes the frequency domain resource division granularity and the subcarrier spacing of the first bandwidth, the first parameter may be determined based on parameters corresponding to the frequency domain resource division granularity and the subcarrier spacing of the first bandwidth. For example, the first parameter may be a product of the parameters corresponding to the frequency domain resource division granularity and the subcarrier spacing of the first bandwidth.

In an example, the first parameter may be equal to $\lceil G1 * 2^{u1 - u2} \rceil$, where G1 represents the frequency domain resource division granularity of the first bandwidth, u1 is a parameter value corresponding to the subcarrier spacing of the first narrowband, and u2 is a parameter value corresponding to the subcarrier spacing of the first bandwidth. The parameter values corresponding to the subcarrier spacings of the first narrowband and the first bandwidth may be determined according to Table 2.

For example, the subcarrier spacing of the first narrowband is 30 kHz, the subcarrier spacing of the first bandwidth is 15 kHz, and then the parameter corresponding to the subcarrier spacing of the first narrowband is 1, and the parameter corresponding to the subcarrier spacing of the first bandwidth is 0. If the frequency domain resource granularity of the first bandwidth is 1 RB, the $\text{first parameter} = \lceil 1 * 2 \rceil = 2 \text{ RBs}$.

In another example, the subcarrier spacing of the first narrowband is 15 kHz, and the subcarrier spacing of the first bandwidth is 30 kHz. If the frequency domain resource granularity of the first bandwidth is 1 RB, the first $\text{parameter} = \lceil 1 * 2^{0 - 1} \rceil = 1 \text{ RB}$.

Case 6. If the configuration parameter includes the CORESET resource granularity and the subcarrier spacing of the first bandwidth, the first parameter may be determined based on parameters corresponding to the CORESET resource granularity and the subcarrier spacing of the first bandwidth. For example, the first parameter may be a product of the parameters corresponding to the CORESET resource granularity and the subcarrier spacing of the first bandwidth.

For a method for determining the CORESET resource granularity, refer to the example in Case 2. For the parameter corresponding to the subcarrier spacing, refer to Case 3. Details are not described herein again.

In an example, the $\text{first parameter} = \lceil K1 * 2^{u1 - u2} \rceil$, where K1 represents the CORESET resource granularity of the first bandwidth. For descriptions of and methods for determining u1 and u2, refer to the foregoing descriptions. Details are not described again.

For example, if the CORESET resource granularity of the first bandwidth is 3 RBs, u1 = 1, and u2 = 0, the $\text{first parameter} = \lceil 3 * 2^{1 - 0} \rceil = 6 \text{ RBs}$.

Case 7: If the configuration parameter includes the frequency domain resource division granularity, the CORESET resource granularity, and the subcarrier spacing of the first bandwidth, the first parameter may be determined based on parameters corresponding to the frequency domain resource division granularity, the CORESET resource granularity, and the subcarrier spacing of the first bandwidth. For example, the first parameter may be determined based on a first value and the subcarrier spacing, and the first value is a least common multiple of the frequency domain resource division granularity and the CORESET resource granularity of the first bandwidth.

For a method for determining the least common multiple of the frequency domain resource division granularity and the CORESET resource granularity of the first bandwidth, refer to case 4.

In an example, the $\text{first parameter} = \lceil M * 2^{u1 - u2} \rceil$, where M is the least common multiple of the frequency domain resource division granularity and the CORESET resource granularity of the first bandwidth. For u1 and u2, refer to the foregoing descriptions.

For example, a case that the frequency domain resource division granularity of the first bandwidth is 6 RBs, the CORESET resource granularity is 4 RBs, the subcarrier spacing of the first bandwidth is 15 kHz, and the subcarrier spacing of the first narrowband is 30 kHz is used as an example. In this case, M = 12 RBs, u1 = 1, u2 = 0, and the $\text{first parameter} = \lceil 12 * 2^{1 - 0} \rceil = 24 \text{ RBs}$.

It should be noted that foregoing Case 1 to Case 7 are merely examples, and the terminal device may also determine the first parameter in another manner and/or by using another parameter. For example, the terminal device may also determine the first parameter based on a bandwidth and the subcarrier spacing of the first bandwidth.

Optionally, the terminal device may determine the quantity of RBs included in the first bandwidth based on correspondences between the bandwidth, the subcarrier spacing, and the quantity of RBs. The terminal device determines the first parameter based on the quantity of RBs included in the first bandwidth. For a method for determining the first parameter by the terminal device based on the quantity of RBs included in the first bandwidth, refer to foregoing Case 1. Details are not described again.

The correspondences between the bandwidth, the subcarrier spacing, and the quantity of RBs may be preconfigured for the terminal device in the form of a table, or certainly, may be configured for the terminal device in another form, for example, in the form of an array. For example, the correspondences between the bandwidth, the subcarrier spacing, and the quantity of RBs may be shown in Table 3 and Table 4.

**Table 3**

| SCS (kHz) | 5 MHz | 10 MHz | 15 MHz | 20 MHz | 25 MHz | 30 MHz | 40 MHz | 50 MHz | 60 MHz | 80 MHz | 90 MHz | 100 MHz |
|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | N/A | N/A | N/A | N/A |
| 30 | 11 | 24 | 38 | 51 | 65 | 78 | 106 | 133 | 162 | 217 | 245 | 273 |
| 60 | N/A | 11 | 18 | 24 | 31 | 38 | 51 | 65 | 79 | 107 | 121 | 135 |

**Table 4**

| SCS (kHz) | 50 MHz | 100 MHz | 200 MHz | 400 MHz |
|---|---|---|---|---|
| | NRB | NRB | NRB | NRB |
| 60 | 66 | 132 | 264 | N.A |
| 120 | 32 | 66 | 132 | 264 |

It should be noted that the correspondences between the bandwidth, the subcarrier spacing, and the quantity of RBs in Table 3 and Table 4 are merely examples. Table 3 and Table 4 may further include other correspondences between the bandwidth, the subcarrier spacing, and the quantity of RBs. This is not limited. In Table 3, if the bandwidth of the first bandwidth is 15 MHz, and the subcarrier spacing of the first bandwidth is 15 kHz, the quantity of RBs included in the first bandwidth may be 79. With reference to Table 1, it can be learned that the RBG granularity of the first bandwidth may be 8 or 16, that is, the first parameter may be 8 or 16. For a method for determining the first parameter, refer to foregoing Case 1. Details are not described herein again. For descriptions of the other values in Table 3 and values in Table 4, refer to the foregoing descriptions. Details are not described again.

As shown in FIG. 11, to enable a terminal device to transmit information to a network device across slots, embodiments of this application further provide an information transmission method. The method may include the following steps.

Step 1101. A terminal device sends capability information of the terminal device to a network device.

The capability information of the terminal device may be that the terminal device supports cross-slot transmission. Cross-slot means that the terminal device may send information to the network device in a plurality of consecutive slots through one transport block (transmission block, TB). If the terminal device is a low-capability terminal device, for example, with a small supported bandwidth, a TB size that can be supported by an allocated time frequency resource is consequently limited. If one TB is mapped to a plurality of slots, a larger TB size (a size of one data packet, that is, a quantity of bits included in one data packet) may be supported. In addition, compared with a case that one TB is split into a plurality of TBs for transmission in different slots, mapping one TB to a plurality of slots can obtain a better coding gain. In addition, the plurality of TBs require a plurality of corresponding cyclic redundancy checks (cyclic redundancy check, CRC), while one TB requires only one CRC, thereby reducing redundant bits.

That the terminal device supports cross-slot transmission may mean that hardware or software of the terminal device supports cross-slot transmission. For example, a professional may optimize the performance of the hardware or software of the terminal device, so that the optimized terminal device can support cross-slot transmission.

Optionally, the terminal device may proactively report the capability information of the terminal device, for example, report the capability information of the terminal device when establishing an RRC connection to the network device. Alternatively, the terminal device may report the capability information of the terminal device after receiving request information from the network device. This is not limited. The capability information of the terminal device may be reported by using uplink control information UCI, random access request information, or RRC signaling. For example, the terminal device may indicate, by using the uplink control information UCI, whether cross-slot transmission is supported, or indicate, by using the UCI, a quantity of symbols corresponding to a starting point and a length that are supported by the terminal device. For example, a quantity of symbols indicated by the UCI is less than 14, that is, the quantity of symbols corresponding to the starting point and the length that are supported by the terminal device is less than 14. Because one slot may include 14 symbols, if the quantity of symbols indicated by the UCI is less than 14, it indicates that the terminal device does not support cross-slot transmission. If the quantity of symbols indicated by the UCI is greater than or equal to 14, it indicates that the terminal device supports cross-slot transmission.

Step 1102. The network device sends, if the terminal device supports cross-slot transmission, information to the terminal device by using a resource of a first narrowband.

The information may include one or more of control information, data information, access information, paging information, or broadcast information. For example, if the information includes control information, the control information may be downlink control information; and if the information includes data information, the data information may be downlink data information.

For the first narrowband, refer to the foregoing descriptions. The resource of the first narrowband may be for transmitting information. For example, the resource may be a symbol.

In a possible embodiment, the information is downlink control information, and the resource is a symbol. A starting symbol of transmission of the downlink control information is fixed as a symbol 0; or an index of the starting symbol of transmission of the downlink control information is less than 3 or 4; or when the downlink control information is not repeatedly sent, a maximum index of the starting symbol of transmission of the downlink control information is N1, and when the downlink control information is repeatedly sent, the maximum index of the starting symbol of transmission of the downlink control information is N2, where N2 is not greater than N1; or when the information is the downlink control information, the maximum index of the starting symbol of transmission of the downlink control information is M1, and when the information is data, a maximum index of a starting symbol of transmission of the data is M2, where M1 is not greater than M2.

Specifically, a case that the terminal device supports transmission across two slots is used as an example, and the information includes control information, for example, downlink control information. The starting symbol of transmission of the downlink control information may be a fixed symbol, for example, a symbol 0, or an index of the starting symbol of transmission of the downlink control information is less than a preset value. For example, the preset value may be set in advance. For example, the preset value may be 3 or 4. This is not limited. Optionally, if the downlink control information does not need to be repeatedly sent, a maximum index of the starting symbol of transmission of the downlink control information may be N1; and if the downlink control information needs to be repeatedly sent, a maximum index of the starting symbol of transmission of the downlink control information may be N2, where N2 is less than or equal to N1.

In a possible embodiment, when the information is data, and the resource is a symbol, at least one element in a value set of a quantity L of resources included in the data transmission belongs to {7, 9, 11, 14}; or a value set of L = 7L is {7, 14}; or a value set of L is {7, 14, 28}.

Specifically, if the information includes data information, optionally, at least one element in the value set of the quantity L of resources included in data transmission belongs to {7, 9, 11, 14}. Table 5 shows reference signal locations that can be supported by a downlink data channel in an existing NR protocol. Quantities of symbols and locations of demodulation reference information (demodulation reference signal, DMRS) included in different data symbol lengths may be indicated. A value indicated by each option is an index value of a location in data, that is, a location of a starting symbol $l_0$ of the data. For example, a data symbol length is 8, an option 0 corresponds to 1 DMRS symbol, a location of the DMRS is $l_0$ (the location of the starting symbol of the data), an option 2 corresponds to 3 DMRS symbols, and a location of the DMRS is $l_0$, 3, 6. That is, index values of the DMRS symbols are 0, 3, and 6. According to Table 5, for each type of maximum quantity of DMRSs that can be supported, a data symbol length corresponding to one DMRS is selected. For example, a largest data symbol length corresponding to each type of maximum quantity of DMRSs that can be supported is selected. For example, 7 symbols are selected as a data length of a DMRS supporting 2 symbols. For example, 9 symbols are selected as a data length of a DMRS supporting 3 symbols. For example, 11 symbols are selected as a data length of a DMRS supporting 4 symbols. For example, 14 symbols are selected as a data length of a DMRS supporting 4 symbols.

**Table 5**

| Data symbol length | Option 0 | Option 1 | Option 2 | Option 3 |
|---|---|---|---|---|
| 2 | $l_0$ | $l_0$ | $l_0$ | $l_0$ |
| 3 | $l_0$- | $l_0$- | $l_0$ | $l_0$ |
| 4 | $l_0$ | $l_0$ | $l_0$ | $l_0$ |
| 5 | $l_0$- | $l_0$, 4- | $l_0$, 4 | $l_0$, 4 |
| 6 | $l_0$ | $l_0$, 4 | $l_0$, 4 | $l_0$, 4 |
| 7 | $l_0$ | $l_0$,4 | $l_0$, 4 | $l_0$, 4 |
| 8 | $l_0$- | $l_0$, 6- | $l_0$, 3, 6 | $l_0$, 3, 6 |
| 9 | $l_0$- | $l_0$, 7- | $l_0$, 4, 7 | $l_0$, 4, 7 |

(continued)

| Data symbol length | Option 0 | Option 1 | Option 2 | Option 3 |
|---|---|---|---|---|
| 10 | $l_0$- | $l_0$, 7- | $l_0$, 4, 7 | $l_0$, 4, 7 |
| 11 | $l_0$- | $l_0$, 8- | $l_0$, 4, 8 | $l_0$, 3, 6, 9 |
| 12 | $l_0$- | $l_0$, 9- | $l_0$, 5, 9 | $l_0$, 3, 6, 9 |
| 13 | $l_0$- | $l_0$, 9- | $l_0$, 5, 9 | $l_0$, 3, 6, 9 |
| 14 | $l_0$- | $l_0$, 9- | $l_0$, 5, 9 | $l_0$, 3 6, 9 |

It should be noted that the data symbol lengths and the options in Table 5 are merely examples, and other data symbols and options may be further included. This is not limited.

Optionally, a value set of L is {7, 14}. For example, a value of L is a quantity of symbols included in one slot. For example, a value of L is half of a quantity of symbols included in one slot.

Optionally, a value set of L is {7, 14, 28}. For example, a value of L is an integer multiple of a quantity of symbols included in one slot.

Certainly, the value set of L may further include another value. For example, if the terminal device supports transmission across more than two slots, the value set of the quantity L of resources may further include another value. For example, if the terminal device supports transmission across 3 slots, the value set of L may include 35 or 42. This is not limited.

Further, when the information includes control information, a maximum index of a starting symbol of transmission of the control information is less than or equal to a maximum index of a starting symbol of data transmission when the information includes data.

Based on the technical solution in FIG. 11, in a case that the terminal device supports cross-slot information transmission, transmission may be performed in a plurality of time units through one TB. In this way, overheads for CRC redundant bits are reduced, and transmission performance at a low bit rate can be better.

The solutions in the foregoing embodiments of this application may be combined on a premise that the solutions are not contradictory.

In the foregoing embodiments provided in this application, the methods provided in embodiments of this application are separately described from the perspective of the network device, the terminal device, and interaction between the network device and the terminal device. It may be understood that, to implement the functions in the methods provided in the foregoing embodiments of this application, each network element such as the network device or the terminal device includes a corresponding hardware structure and/or software module for performing the functions. A person skilled in the art should be easily aware that, the algorithm steps in the examples described with reference to the embodiments disclosed in the application; filling invention may be implemented by hardware or a combination of hardware and computer software in this application. Whether a function is implemented by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, functional modules of the network device and the terminal device may be divided based on the foregoing method examples. For example, each functional module may be divided according to each function, or two or more functions may be integrated into one processing module. The integrated module may be implemented in the form of hardware, or may be implemented in the form of a software functional module. It should be noted that module division in this embodiment of this application is an example and is merely logical function division. During actual implementation, there may be another division manner.

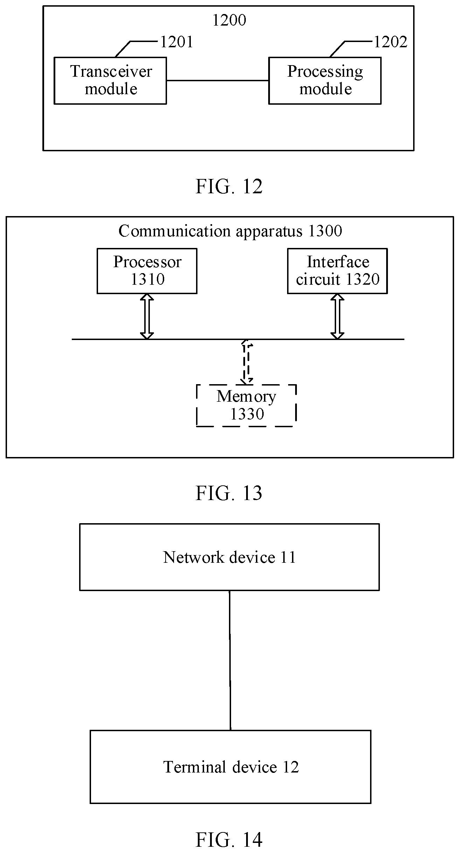

FIG. 12 and FIG. 13 are schematic structural diagrams of possible communication apparatuses according to embodiments of this application. These communication apparatuses may implement the functions of the terminal device or the network device in the foregoing method embodiments. Therefore, beneficial effects of the foregoing method embodiments can also be implemented. In embodiments of this application, the communication apparatus may be the terminal device 120 or the terminal device 130 shown in FIG. 3, may be the network device 110 shown in FIG. 3, or may be a module (for example, a chip) used in the terminal device or the network device.

As shown in FIG. 12, a communication apparatus 1200 includes a transceiver module 1201 and a processing module 1202. The communication apparatus 1200 may be configured to implement functions of the terminal device or the network device in the method embodiments shown in FIG. 5 and FIG. 11.

When the communication apparatus 1200 is configured to implement the functions of the terminal device in the method embodiment in FIG. 5, the transceiver module 1201 is configured to obtain first information, where the first information includes configuration information of a first bandwidth and/or first indication information. The processing module 1202 is configured to determine a first parameter based on the first information, where the first parameter is for determining resource configuration information of a first narrowband, at least one resource in the first narrowband is included in the first bandwidth, and the resource configuration information of the first narrowband includes at least one of the following: a starting resource of the first narrowband, a quantity of resources included in the first narrowband, or a location of the first narrowband in the first bandwidth. The processing module 1202 is further configured to determine the first narrowband based on the first parameter. The transceiver module 1201 is further configured to transmit information by using a resource of the first narrowband.

When the communication apparatus 1200 is configured to implement the functions of the network device in the method embodiment in FIG. 5, the processing module 1202 is configured to determine first information, where the first information includes configuration information of a first bandwidth. The processing module 1202 is further configured to determine a first parameter based on the first information. The processing module 1202 is further configured to determine resource configuration information of a first narrowband based on the first parameter, where at least one resource in the first narrowband is included in the first bandwidth, and the resource configuration information of the first narrowband includes at least one of the following: a starting resource of the first narrowband, a quantity of resources included in the first narrowband, or a location of the first narrowband in the first bandwidth. The transceiver module 1201 is configured to transmit information by using a resource of the first narrowband.

When the communication apparatus 1200 is configured to implement the function of the network device in the method embodiment in FIG. 5, the processing module 1202 is configured to determine first information, where the first information includes first indication information, and the first indication information is related to configuration information of a first narrowband. The transceiver module 1201 is configured to transmit information by using a resource of the first narrowband.

When the communication apparatus 1200 is configured to implement functions of the terminal device in the method embodiment in FIG. 11, the transceiver module 1201 is configured to send capability information of the terminal device to the network device, where the capability information of the terminal device indicates that the terminal device supports cross-slot transmission. The transceiver module 1201 is further configured to transmit information by using a resource of a first narrowband.

When the communication apparatus 1200 is configured to implement functions of the network device in the method embodiment in FIG. 11, the transceiver module 1201 is configured to receive capability information of the terminal device sent by the terminal device, where the capability information of the terminal device indicates that the terminal device supports cross-slot transmission. The processing module 1202 is configured to determine that the terminal device supports cross-slot transmission based on the capability information of the terminal device. The transceiver module 1201 is further configured to send, if the terminal device supports cross-slot transmission, information to the terminal device by using a resource of a first narrowband.

For more detailed descriptions of the transceiver module 1201 and the processing module 1202, refer to the related descriptions in the foregoing method embodiments. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, input data required for running instructions by the processor 1310, or data generated after the processor 1310 runs instructions.

When the communication apparatus 1300 is configured to implement the methods in the foregoing method embodiments, the processor 1310 is configured to perform a function of the processing module 1202, and the interface circuit 1320 is configured to perform a function of the transceiver module 1201.

When the communication apparatus is a chip used in the terminal device, the chip in the terminal device implements a function of the terminal device in the foregoing method embodiments. The chip in the terminal device receives information from another module (for example, a radio frequency module or an antenna) in the terminal device, and the information is sent by the network device to the terminal device. Alternatively, the chip in the terminal device sends information to another module (for example, a radio frequency module or an antenna) in the terminal device, and the information is sent by the terminal device to the network device.

When the communication apparatus is a chip used in the network device, the chip in the network device implements a function of the network device in the foregoing method embodiments. The chip in the network device receives information from another module (for example, a radio frequency module or an antenna) in the network device, and the information is sent by the terminal device to the network device. Alternatively, the chip in the network device sends information to another module (for example, a radio frequency module or an antenna) in the network device, and the information is sent by the network device to the terminal device.

It may be understood that, the processor in this embodiment of this application may be a central processing unit (central processing unit, CPU), or may be another general-purpose processor, a digital signal processor (digital signal processor, DSP), an application specific integrated circuit (application specific integrated circuit, ASIC), or a field programmable gate array (field programmable gate array, FPGA), or another programmable logic device, a transistor logic device, a hardware component, or any combination thereof. The general purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium instruction any other forms well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in access network device or terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, or another programmable apparatus. The computer programs or the instructions may be stored in a computer-readable storage medium, or transmitted by using the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape, or may be an optical medium, for example, a DVD, or may be a semiconductor medium, for example, a solid state disk (solid state disk, SSD).

The modules in FIG. 12 and FIG. 13 may also be referred to as units. For example, the processing module may be referred to as a processing unit.

FIG. 14 is an example diagram of a communication system according to an embodiment of this application. The communication system includes a network device 11 and a terminal device 12.

The network device 11 is configured to perform actions performed by the network device in the foregoing embodiments, for example, configured to perform step 500 to step 504 in FIG. 5 and step 1102 in FIG. 11.

The terminal device 12 is configured to perform actions performed by the terminal device in the foregoing embodiments. For example, the terminal device 12 is configured to perform step 502 to step 504 in FIG. 5 and step 1101 in FIG. 11.

In an implementation process, the steps in the method provided in this embodiment may be performed by using an integrated logic circuit in a hardware form in the processor or an instruction in a software form. Steps of the methods disclosed with reference to embodiments of this application may be directly executed and completed by a hardware processor, or may be executed and completed by using a combination of hardware and software modules in the processor.

Embodiments of this application further provide a computer-readable storage medium, including instructions. The instructions, when run on a computer, enable the computer to perform any one of the foregoing methods.

Embodiments of this application further provide a computer program product including instructions. The instructions, when run on a computer, enable the computer to perform any one of the foregoing methods.

Embodiments of this application further provide a communication system, including the foregoing network device and terminal device.

Embodiments of this application further provide a chip. The chip includes a processor and an interface circuit. The interface circuit is coupled to the processor. The processor is configured to run a computer program or instructions, to implement the foregoing methods. The interface circuit is configured to communicate with another module other than the chip.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more and "a plurality of" means two or more. The term "and/or" describes an association between the associated objects, and represents that three relationships may exist. For example, A and/or B may represent that: only A exists, both A and B exist, and only B exists, where A and B may be singular or plural. In the text descriptions of this application, the character "/" generally indicates an "or" relationship between the associated objects. In the formulas of this application, the character "/" indicates a "division" relationship between the associated objects.

It may be understood that various reference numerals in embodiments of this application are merely for differentiation for ease of description, and are not intended to limit the scope of embodiments of this application. Sequence numbers of the foregoing processes do not indicate an execution sequence, and an execution sequence of the processes shall be determined based on functions and internal logic of the processes.

**Claims**

1. An information transmission method, comprising:

   obtaining, by a terminal device, first information, wherein the first information comprises configuration information of a first bandwidth;
   determining, by the terminal device, a first parameter based on the first information, wherein the first parameter is for determining resource configuration information of a first narrowband, at least one resource in the first narrowband is comprised in the first bandwidth, and the resource configuration information of the first narrowband comprises at least one of the following: a starting resource of the first narrowband, a quantity of resources comprised in the first narrowband, or a location of the first narrowband in the first bandwidth;
   determining, by the terminal device, the first narrowband based on the first parameter; and
   transmitting, by the terminal device, information by using a resource of the first narrowband.

2. An information transmission method, comprising:

   obtaining, by a terminal device, first information, wherein the first information comprises first indication information;
   determining, by the terminal device, a first parameter based on the first indication information, wherein the first parameter is for determining resource configuration information of a first narrowband, at least one resource in the first narrowband is comprised in a first bandwidth, and the resource configuration information of the first narrowband comprises at least one of the following: a starting resource of the first narrowband, a quantity of resources comprised in the first narrowband, or a location of the first narrowband in the first bandwidth;
   determining, by the terminal device, the first narrowband based on the first parameter; and
   sending or receiving, by the terminal device, information by using a resource of the first narrowband.

3. The method according to claim 1 or 2, wherein

   the first bandwidth is a carrier, and the configuration information of the first bandwidth comprises at least one of the following: a quantity of resources comprised in the carrier, a center frequency of the carrier, a band band on which the carrier is located, or a maximum subcarrier spacing SCS supported by the carrier; or
   the first bandwidth is a bandwidth part BWP, and the configuration information of the first bandwidth comprises at least one of the following: a size of a resource block group RBG corresponding to the BWP, a configuration of a control resource set CORESET corresponding to the BWP, a quantity of resources comprised in the BWP, a starting resource of the BWP, a subcarrier spacing SCS of the BWP, or a cyclic prefix type supported by the BWP; and
   the determining, by the terminal device, a first parameter based on the first information comprises:
   determining, by the terminal device, the first parameter based on one or more of a resource allocation granularity of the first bandwidth, a CORESET resource allocation granularity, and a subcarrier spacing.

4. The method according to claim 2, wherein the method further comprises:
   determining, by the terminal device, the resource configuration information of the first narrowband by using a quantity of resources as a granularity, wherein the quantity is the first parameter.

5. The method according to any one of claims 1 to 4, wherein

   at least one element in a value set of the first parameter belongs to {2, 4, 6, 8, 12, 16, 24}; or
   at least one value of the first parameter is $2^m$, and m is a positive integer; or
   at least one value of the first parameter is a multiple of 6.

**6.** The method according to any one of claims 2 to 4, wherein the first parameter is a first reference location, and the indicating, by the terminal device, the first parameter based on the first indication information comprises: determining, by the terminal device, the first reference location from a reference location set based on the first indication information, wherein the reference location set comprises at least two of a starting location of the first bandwidth, a starting location of a carrier on which the first bandwidth is located, a common resource block CRB, a point A point A, an end location of the first bandwidth, a starting location of a synchronization signal and physical broadcast channel resource block SSB, or an end location of the SSB.

**7.** The method according to any one of claims 1 to 6, wherein
the first bandwidth is a BWP of the terminal device, and a size of the BWP is greater than a size of the first narrowband; and/or a size of the BWP is M times a size of the first narrowband, wherein M is configured, or a value of M is an integer multiple of 0.5, or avalue of M is an integer multiple of 0.25, or at least one element in a value set of M belongs to {0.25, 0.5, 1, 2, 3, 4, 5}, or M is a prespecified positive integer.

**8.** The method according to any one of claims 1 to 6, wherein
the first bandwidth is a carrier, a size of the carrier is greater than a size of the first narrowband, and the first indication information further indicates a candidate location of the first narrowband or indicates a quantity of locations of the first narrowband.

**9.** An information transmission method, comprising:

determining, by a network device, first information, wherein the first information comprises configuration information of a first bandwidth;
determining, by the network device, a first parameter based on the first information;
determining, by the network device, resource configuration information of a first narrowband based on the first parameter, wherein at least one resource in the first narrowband is comprised in the first bandwidth, and the resource configuration information of the first narrowband comprises at least one of the following: a starting resource of the first narrowband, a quantity of resources comprised in the first narrowband, or a location of the first narrowband in the first bandwidth; and
transmitting, by the network device, information by using a resource of the first narrowband.

**10.** An information transmission method, comprising:

determining, by a network device, configuration information of a first narrowband;
sending, by the network device, first information to a terminal device, wherein the first information comprises first indication information, and the first indication information is related to the configuration information of the first narrowband; and
transmitting, by the network device, information by using a resource of the first narrowband.

**11.** The method according to claim 9 or 10, wherein

the first bandwidth is a carrier, and the configuration information of the first bandwidth comprises at least one of the following: a quantity of resources comprised in the carrier, a center frequency of the carrier, a band band on which the carrier is located, or a maximum subcarrier spacing SCS supported by the carrier; or
the first bandwidth is a bandwidth part BWP, and the configuration information of the first bandwidth comprises at least one of the following: a size of a resource block group RBG corresponding to the BWP, a configuration of a control resource set CORESET corresponding to the BWP, a quantity of resources comprised in the BWP, a starting resource of the BWP, a subcarrier spacing SCS of the BWP, or a cyclic prefix type supported by the BWP; and
the determining, by the terminal device, a first parameter based on the first information comprises:
determining, by the terminal device, the first parameter based on one or more of a resource allocation granularity of the first bandwidth, a CORESET resource allocation granularity, and a subcarrier spacing.

**12.** The method according to claim 10, wherein the method further comprises:
determining, by the terminal device, the resource configuration information of the first narrowband by using a quantity of resources as a granularity, wherein the quantity is the first parameter.

**13.** The method according to any one of claims 9 to 12, wherein

at least one element in a value set of the first parameter belongs to {2, 4, 6, 8, 12, 16, 24}; or
at least one value of the first parameter is $2^m$, and m is a positive integer; or
at least one value of the first parameter is a multiple of 6.

14. The method according to any one of claims 9 to 13, wherein
the first bandwidth is a BWP of the terminal device, and a size of the BWP is greater than a size of the first narrowband; and/or a size of the BWP is M times a size of the first narrowband, wherein M is configured, or a value of M is an integer multiple of 0.5, or a value of M is an integer multiple of 0.25, or at least one element in a value set of M belongs to {0.25, 0.5, 1, 2, 3, 4, 5}, or M is a prespecified positive integer.

15. A communication apparatus, comprising a communication unit and a processing unit, wherein:

the unit is configured to obtain first information, wherein the first information comprises configuration information of a first bandwidth;
the processing unit is configured to determine a first parameter based on the first information obtained by the communication unit, and determine the first narrowband based on the first parameter, wherein the first parameter is for determining resource configuration information of the first narrowband, at least one resource in the first narrowband is comprised in the first bandwidth, and the resource configuration information of the first narrowband comprises at least one of the following: a starting resource of the first narrowband, a quantity of resources comprised in the first narrowband, or a location of the first narrowband in the first bandwidth; and
the communication unit is further configured to send or receive information by using a resource of the first narrowband determined by the processing unit.

16. A communication apparatus, comprising a communication unit and a processing unit, wherein

the communication unit is configured to obtain first information, wherein the first information comprises first indication information;
the processing unit is configured to determine a first parameter based on the first indication information obtained by the communication unit, and determine the first narrowband based on the first parameter, wherein the first parameter is for determining resource configuration information of the first narrowband, at least one resource in the first narrowband is comprised in a first bandwidth, and the resource configuration information of the first narrowband comprises at least one of the following: a starting resource of the first narrowband, a quantity of resources comprised in the first narrowband, or a location of the first narrowband in the first bandwidth; and
the communication unit is further configured to send or receive information by using a resource of the first narrowband determined by the processing unit.

17. The communication apparatus according to claim 15 or 16, wherein

the first bandwidth is a carrier, and the configuration information of the first bandwidth comprises at least one of the following: a quantity of resources comprised in the carrier, a center frequency of the carrier, a band band on which the carrier is located, or a maximum subcarrier spacing SCS supported by the carrier; or
the first bandwidth is a bandwidth part BWP, and the configuration information of the first bandwidth comprises at least one of the following: a size of a resource block group RBG corresponding to the BWP, a configuration of a control resource set CORESET corresponding to the BWP, a quantity of resources comprised in the BWP, a starting resource location of the BWP, a subcarrier spacing SCS supported by the BWP, or a cyclic prefix type supported by the BWP; and
the processing unit is further configured to determine the first parameter based on one or more of a resource allocation granularity of the first bandwidth, a CORESET resource allocation granularity, or a subcarrier spacing.

18. The communication apparatus according to claim 16, wherein
the processing unit is further configured to determine the resource configuration information of the first narrowband by using a quantity of resources as a granularity, wherein the quantity is the first parameter.

19. The communication apparatus according to any one of claims 15 to 18, wherein

at least one element in a value set of the first parameter belongs to {2, 4, 6, 8, 12, 16, 24}; or
at least one value of the first parameter is $2^m$, and m is a positive integer; or
at least one value of the first parameter is a multiple of 6.

20. The communication apparatus according to any one of claims 15 to 19, wherein
the processing unit is further configured to determine, when the first parameter is a first reference location, the first reference location from a reference location set based on the first indication information, wherein the reference location set comprises at least two of a starting location of the first bandwidth, a starting location of a carrier on which the first bandwidth is located, a common resource block CRB, a point A point A, an end location of the first bandwidth, a starting location of a synchronization signal and physical broadcast channel resource block SSB, or an end location of the SSB.

21. The communication apparatus according to any one of claims 15 to 20, wherein
the first bandwidth is a BWP of the terminal device, and a size of the BWP is greater than a size of the first narrowband; and/or a size of the BWP is M times a size of the first narrowband, wherein M is configured, or a value of M is an integer multiple of 0.5, or a value of M is an integer multiple of 0.25, or at least one element in a value set of M belongs to {0.25, 0.5, 1, 2, 3, 4, 5}, or M is a prespecified positive integer.

22. The communication apparatus according to any one of claims 15 to 20, wherein
the first bandwidth is a carrier, a size of the carrier is greater than a size of the first narrowband, and the first indication information further indicates a candidate location of the first narrowband or indicates a quantity of locations of the first narrowband.

23. A communication apparatus, comprising a processing unit and a communication unit, wherein

the processing unit is configured to determine first information, wherein the first information comprises configuration information of a first bandwidth; and
the communication unit is configured to receive or send information by using a resource of a first narrowband, wherein the first narrowband is determined based on a first parameter determined by the processing unit, the first parameter is determined based on the first information determined by the processing unit, the first parameter is for determining resource configuration information of the first narrowband, at least one resource in the first narrowband is comprised in the first bandwidth, and the resource configuration information of the first narrowband comprises at least one of the following: a starting resource of the first narrowband, a quantity of resources comprised in the first narrowband, or a location of the first narrowband in the first bandwidth.

24. A communication apparatus, comprising a communication unit, wherein:

the communication unit is configured to send first information, wherein the first information comprises first indication information, the first indication information is for determining a first parameter, the first parameter is for determining resource configuration information of a first narrowband, at least one resource in the first narrowband is comprised in a first bandwidth, and the resource configuration information of the first narrowband comprises at least one of the following: a starting resource of the first narrowband, a quantity of resources comprised in the first narrowband, or a location of the first narrowband in the first bandwidth; and
the communication unit is further configured to receive or send information by using a resource of the first narrowband.

25. The apparatus according to claim 23 or 24, wherein

the first bandwidth is a carrier, and the configuration information of the first bandwidth comprises at least one of the following: a quantity of resources comprised in the carrier, a center frequency of the carrier, a band band on which the carrier is located, or a maximum subcarrier spacing SCS supported by the carrier; or
the first bandwidth is a bandwidth part BWP, and the configuration information of the first bandwidth comprises at least one of the following: a size of a resource block group RBG corresponding to the BWP, a configuration of a control resource set CORESET corresponding to the BWP, a quantity of resources comprised in the BWP, a starting resource of the BWP, a subcarrier spacing SCS of the BWP, or a cyclic prefix type supported by the BWP; and
the processing unit is further configured to determine the first parameter based on one or more of a resource allocation granularity of the first bandwidth, a CORESET resource allocation granularity, or a subcarrier spacing.

26. The apparatus according to claim 24, wherein the processing unit is further configured to determine the resource configuration information of the first narrowband by using a quantity of resources as a granularity, wherein the quantity is the first parameter.

27. The apparatus according to any one of claims 24 to 26, wherein

at least one element in a value set of the first parameter belongs to {2, 4, 6, 8, 12, 16, 24}; or
at least one value of the first parameter is $2^m$, and m is a positive integer; or
at least one value of the first parameter is a multiple of 6.

28. The apparatus according to any one of claims 24 to 27, wherein
the first bandwidth is a BWP of the terminal device, and a size of the BWP is greater than a size of the first narrowband; and/or a size of the BWP is M times a size of the first narrowband, wherein M is configured, or a value of M is an integer multiple of 0.5, or a value of M is an integer multiple of 0.25, or at least one element in a value set of M belongs to {0.25, 0.5, 1, 2, 3, 4, 5}, or M is a prespecified positive integer.

29. A communication apparatus, comprising one or more processors and one or more memories, wherein the one or more memories are coupled to the one or more processors, and the one or more memories are configured to store computer program code or computer instructions; and
the one or more processors, when executing the computer instructions, enable the communication apparatus to perform the information transmission method according to any one of claims 1 to 8.

30. A communication apparatus, comprising one or more processors and one or more memories, wherein the one or more memories are coupled to the one or more processors, and the one or more memories are configured to store computer program code or computer instructions; and
the one or more processors, when executing the computer instructions, enable the communication apparatus to perform the information transmission method according to claim 9 or 10.

31. A computer-readable storage medium, storing computer instructions or a program, wherein when the computer instructions or program are or is run on a computer, the computer is enabled to perform the information transmission method according to any one of claims 1 to 8.

32. A computer-readable storage medium, storing computer instructions or a program, wherein when the computer instructions or program are or is run on a computer, the computer is enabled to perform the information transmission method according to claim 9 or 10.

33. A chip, comprising: a processor and a communication interface, wherein the processor is coupled to a memory through the communication interface, and the processor, when executing a computer program or instructions in the memory, enables the information transmission method according to any one of claims 1 to 8 to be performed.

34. A chip, comprising: a processor and a communication interface, wherein the processor is coupled to a memory through the communication interface, and the processor, when executing a computer program or instructions in the memory, enables the information transmission method according to claim 9 or 10 to be performed.

Terminal device 1

| 0 | 1 | 2 | 3 | 4 | 5 | 6 | 7 | ... | 100 | 101 | 102 | 103 | 104 | 105 | 106 | 107 |

RBG1  RBG2  RBG6  RBG27

Terminal device 2

| 0' | 1' | 2' | 3' | ... | 98' | 99' | 100' | 101' |

RBG1'  RBG2'  RBG49'  RBG50'

FIG. 1

First bandwidth

| 0 | 1 | 2 | 3 | 4 | 5 | 6 | 7 | ... | 100 | 101 | 102 | 103 | 104 | 105 | 106 | 107 |

RBG1  RBG2  RBG6  RBG27

First narrowband

| 0' | 1' | 2' | 3' | ... | 96' | 97' | 98' | 99' | 100' | 101' |

RBG1'  RBG25'

FIG. 2

Network device 110

Terminal device 120

Terminal device 130

FIG. 3

400

Processor 401

CPU0

CPU1

Processor 407

CPU0

CPU1

Communication
line 402

Memory 404

Communication
interface 403

Output
device 405

Input device 406

FIG. 4

Terminal device

Network device

Step 500. Determine first information

Step 501. First information

Step 502. Determine first information
based on the first information

Step 502. Determine first information
based on the first information

Step 503. Determine a first narrowband
based on the first parameter

Step 503. Determine a first narrowband
based on the first parameter

Step 504. Send or receive information
by using a resource of the first
narrowband

FIG. 5

FIG. 6

FIG. 7

100 MHZ

20 MHZ

**FIG. 8**

|              | CCE0  |       |       | CCE1  |       |       |
|--------------|-------|-------|-------|-------|-------|-------|
| REG1         | REG3  | REG5  | REG7  | REG9  | REG11 |
| REG0         | REG2  | REG4  | REG6  | REG8  | REG10 |

2 time domain symbols

**FIG. 9**

Frequency domain resource
allocation granularity

First
bandwidth

CORESET resource
granularity

First
narrowband

First parameter

FIG. 10

Terminal device

Network device

Step 1101. Capability information of
a terminal device

Step 1102. Send, if the terminal
device supports cross-slot
transmission, information by using a
resource of a first narrowband

FIG. 11

1200

1201

Transceiver module

1202

Processing module

FIG. 12

Communication apparatus 1300

Processor 1310

Interface circuit 1320

Memory 1330

FIG. 13

Network device 11

Terminal device 12

FIG. 14

## INTERNATIONAL SEARCH REPORT

| | International application No. |
|---|---|
| | **PCT/CN2020/108020** |

| A. | CLASSIFICATION OF SUBJECT MATTER |
|---|---|
| | H04W 72/04(2009.01)i;  H04L 5/00(2006.01)i |

According to International Patent Classification (IPC) or to both national classification and IPC

| B. | FIELDS SEARCHED |
|---|---|

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 带宽, 窄带, 配置, 资源, 载波, 部分带宽, 指示信息, 资源集, 资源块, 资源元素组, bandwidth, narrowband, configurat+, resource, carrier, BWP, indicate, CORESET, resource set, REG, RGB

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107733622 A (ZTE CORPORATION) 23 February 2018 (2018-02-23) description, paragraphs [0133]-[0184], [0209]-[0305], [0494]-[0496] | 1-34 |
| X | ZTE. "Narrowband definition and frequency hopping patterns for MTC enhancement" *3GPP TSG RAN WG1 Meeting #82 R1-154042*, 28 August 2015 (2015-08-28), sections 1-2 | 1-34 |
| A | CN 109565430 A (KOREA ELECTRONICS & TELECOMMUNICATIONS RESEARCH INSTITUTE) 02 April 2019 (2019-04-02) entire document | 1-34 |
| A | CN 110024460 A (OPPO GUANGDONG MOBILE COMMUNICATIONS CO., LTD.) 16 July 2019 (2019-07-16) entire document | 1-34 |
| A | CN 110351845 A (CHINA MOBILE COMMUNICATION LTD., RESEARCH INSTITUTE et al.) 18 October 2019 (2019-10-18) entire document | 1-34 |
| A | WO 2018203727 A1 (SAMSUNG ELECTRONICS CO., LTD.) 08 November 2018 (2018-11-08) entire document | 1-34 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 April 2021** | **08 May 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/108020**

| Patent document cited in search report | | | Publication date (day/month/year) | Patent family member(s) | | | Publication date (day/month/year) |
|---|---|---|---|---|---|---|---|
| CN | 107733622 | A | 23 February 2018 | US | 2020383113 | A1 | 03 December 2020 |
| | | | | WO | 2018028696 | A1 | 15 February 2018 |
| CN | 109565430 | A | 02 April 2019 | KR | 20180081464 | A | 16 July 2018 |
| | | | | JP | 2019530997 | A | 24 October 2019 |
| | | | | EP | 3461221 | A1 | 27 March 2019 |
| | | | | US | 2020187236 | A1 | 11 June 2020 |
| | | | | IN | 201817048622 | A | 12 July 2019 |
| | | | | WO | 2018128439 | A1 | 12 July 2018 |
| CN | 110024460 | A | 16 July 2019 | AU | 2017418045 | A1 | 19 December 2019 |
| | | | | CA | 3064971 | A1 | 20 December 2018 |
| | | | | IL | 270790 | D0 | 30 January 2020 |
| | | | | KR | 20200016887 | A | 17 February 2020 |
| | | | | CN | 111132336 | A | 08 May 2020 |
| | | | | WO | 2018227622 | A1 | 20 December 2018 |
| | | | | PH | 12019502668 | A1 | 08 June 2020 |
| | | | | JP | 2020524939 | A | 20 August 2020 |
| | | | | MX | 2019015130 | A | 17 February 2020 |
| | | | | EP | 3627921 | A1 | 25 March 2020 |
| | | | | TW | 201906440 | A | 01 February 2019 |
| | | | | BR | 112019026140 | A2 | 30 June 2020 |
| | | | | SG | CN 11201911228 U | A | 30 January 2020 |
| | | | | US | 2020092888 | A1 | 19 March 2020 |
| CN | 110351845 | A | 18 October 2019 | None | | | |
| WO | 2018203727 | A1 | 08 November 2018 | US | 2020059390 | A1 | 20 February 2020 |
| | | | | CN | 109586878 | A | 05 April 2019 |
| | | | | EP | 3636024 | A1 | 15 April 2020 |
| | | | | IN | 201937049588 | A | 07 February 2020 |
| | | | | CN | 108809597 | A | 13 November 2018 |

Form PCT/ISA/210 (patent family annex) (January 2015)